# EUROPEAN PATENT APPLICATION

(11) **EP 2 602 299 A2**
(43) Date of publication of application: **12.06.2013**
(21) Application number: 13157634.0
(22) Date of filing: 31.08.2007
(51) Int. Cl.: C09K 5/04

(54) **Method for circulating selected heat transfer fluids through a closed loop cycle**

(30) Priority: 01.09.2006 US 841713 P
(62) Divisional of application: 07837628.2
(71) Applicant: E. I. du Pont de Nemours and Company, Wilmington, DE 19898 (US)
(72) Inventor: Minor, Barbara Haviland, Elkton, MD 21921 (US); Bivens, Donald Bernard, Kennett Square, PA 19348 (US); Doshi, Shailesh Ratilal, Kingston ON K7P 1S5 (CA); Rao, Velliyur Nott Mallikarjuna, Wilmington, DE 19809 (US); Simonato, Enrico, 10146 Torino (IT)
(74) Representative: Matthews, Derek Peter

(57) **Abstract**

The present invention relates to the use of flexible hoses capable of handling high pressure fluids and providing a barrier against permeation loss in air conditioning and refrigeration systems. Such hoses are particularly suitable in air conditioning and refrigeration in which new, low global warming potential refrigerant alternatives are used.

## Description

### BACKGROUND OF THE INVENTION

### 1. Field of the Invention.

The present invention relates to the use of flexible hoses capable of handling high pressure fluids and providing a barrier against permeation loss in air conditioning and refrigeration systems. More particularly, the present invention relates to the use of such hoses in air conditioning and refrigeration systems, including mobile air conditioning systems, in which new, low global warming potential (GWP) refrigerant alternatives are used. 2. Description of Related Art.

The refrigeration industry has been working for the past few decades to find replacement refrigerants for the ozone depleting chlorofluorocarbons (CFCs) and hydrochlorofluorocarbons (HCFCs) being phased out as a result of the Montreal Protocol. The solution for most refrigerant producers has been the commercialization of hydrofluorocarbon (HFC) refrigerants. The new HFC refrigerants, HFC-134a being the most widely used at this time, have zero ozone depletion potential and thus are not affected by the current regulatory phase out as a result of the Montreal Protocol.

Further environmental regulations may ultimately cause global phase out of certain HFC refrigerants. Currently, the automobile industry is facing regulations relating to global warming potential (GWP) for refrigerants used in mobile air-conditioning. Therefore, there is a great current need to identify new refrigerants with reduced global warming potential for the automobile air-conditioning market. Should the regulations be more broadly applied in the future, an even greater need will be felt for refrigerants that can be used in all areas of the refrigeration and air-conditioning industry.

Currently proposed replacement refrigerants for HFC-134a include HFC-152a, pure hydrocarbons such as butane or propane, or "natural" refrigerants such as CO₂ or ammonia. Many of these suggested replacements are toxic, flammable, and/or have low energy efficiency. Therefore, new alternatives are constantly being sought.

As is widely understood by those having skill in the field, in a typical refrigeration or air conditioning system heat transfer fluids are circulated within a closed loop including a compressor, a condenser and an evaporator. Hoses are typically connected between the outlet of the compressor and the inlet of the condenser; between the outlet of the condenser and the inlet of the evaporator; and between the outlet of the evaporator and the inlet of the compressor. Such hoses must be able to withstand the high pressure of the fluids which are circulated through such systems.

Hoses used for these purposes need to be flexible for ease of installation and use, and often must be shaped into curves and bends for connecting components already installed into fixed positions. They must also be able to contain the fluid pressure. These hoses are often made of elastomeric materials such as natural or synthetic rubber or thermoplastic elastomers, and are typically reinforced with braiding to impart high pressure capability.

Moreover, it is essential that the hoses of such systems offer superior barrier resistance to permeation of the contained fluid through the wall of the hose construction. In addition, the hose wall must provide high barrier resistance to ingression of external fluids, such as air or moisture, into the contained fluid.

In order to meet barrier requirements, hoses are often provided with a suitable thermoplastic barrier layer on the inside. A typical high pressure barrier hose may thus consist of multiple layers - an inner thermoplastic barrier layer made of a polyamide, a polyester or a suitable thermoplastic material; an over-layer of an elastomeric material to provide flexibility; and a braid layer over the elastomeric layer to provide pressure capability and an outer protective cover layer of an elastomeric material.

Attempts to make flexible high pressure high barrier hoses often involve first making a corrugated metallic tube and coating the tube with an elastomeric polymer. Such constructions, however, require complex manufacturing processes, and are expensive for large scale uses. US Patent No. 7,055,553 describes a fluid transfer hose incorporating a metal barrier layer. The metal barrier layer is bonded using techniques that require use of aggressive chemicals. Also, expensive fluoropolymer layers are incorporated in the hose construction.

Moreover, while such hoses provide pressure capability and flexibility, their barrier properties can be improved. With the drive for reduced emissions, this becomes an issue in highly demanding applications such as refrigeration and air conditioning. As low GWP refrigerants are developed it is important to identify barrier hoses which are suitable for these refrigerants.

It would be desirable to provide a flexible hose for air conditioning or refrigeration systems which is suitable for use with new, high-pressure, low GWP refrigerants. Ideally, such a hose would not require the use of aggressive chemicals, would be economical to make, and would meet stringent barrier requirements.

### BRIEF SUMMARY OF THE INVENTION

The present invention relates to transporting a heat transfer fluid within a refrigeration or air conditioning system through a hose, where the hose is able to withstand high-pressure refrigerants, and the hose has improved barrier properties. A further advantage of such hose is its simple and straightforward construction. In a particular embodiment, such hose is especially suitable for use with fluoroolefin compositions which are low GWP refrigerant alternatives. These and other objects, features and advantages of the present invention will become better understood upon having reference to the description of the invention herein.

Therefore, in accordance with the present invention, there is provided a method of providing transport of a heat transfer fluid composition within a refrigeration or air conditioning system, comprising circulating the heat transfer fluid through one or more hoses of said system, wherein said heat transfer fluid comprises a compound selected from the group consisting of: R32, R152a, CF₃I, 1234yf, 1225ye and trans-1234ze.

In a particular embodiment, the composition comprises 1225ye and at least one additional compound selected from the group consisting of HFC-1234ze, HFC-1234yf, HFC-1234ye, HFC-1243zf, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF₃SCF₃, CO₂, NH₃, and CF₃I.

In another particular embodiment, the composition comprises HFC-1234ze and at least one additional compound selected from the group consisting of HFC-1234yf, HFC-1234ye, HFC-1243zf, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF₃SCF₃, CO₂ and CF₃I.

In another particular embodiment, the composition comprises HFC-1234yf and at least one additional compound selected from the group consisting of HFC-1234ye, HFC-1243zf, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF₃SCF₃, CO₂, NH₃, and CF₃I.

In another particular embodiment, the composition comprises HFC-1243zf and at least one additional compound selected from the group consisting of HFC-1234ye, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF₃SCF₃, CO₂ and CF₃I.

In another particular embodiment, the composition comprises HFC-1234ye and at least one additional compound selected from the group consisting of HFC-1243zf, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF₃SCF₃, CO₂ and CF₃I.

In one particular embodiment of a hose configuration, the hose comprises an outer layer comprising a material selected from the group consisting of an elastomer and a polyamide and an inner layer comprising a material selected from the group consisting of an elastomer, a polyamide and a thermoplastic. The hose may further include (a) a tie layer positioned over said inner layer; (b) a metal-polymer laminate positioned over said tie layer and consisting of a layer of polymer compatible with or bondable to said outer surface of said veneer, a thin layer of metallic foil, and another layer of a polymer protecting the metallic foil; (c) a braid under-layer positioned over said metal-polymer laminate and consisting of an elastomeric material; and (d) a reinforcing braid layer positioned over said braid under-layer, wherein the outer layer is positioned on the outside of the reinforcing braid layer.

### BRIEF DESCRIPTION OF THE DRAWINGS

The present invention may be better understood with reference to the following figure, wherein:
FIG.1 is a schematic diagram of a refrigeration or air conditioning system including a plurality of hoses according to the present invention.
FIG. 2 is a cross-sectional view of a hose of the present invention.

### DETAILED DESCRIPTION OF THE INVENTION

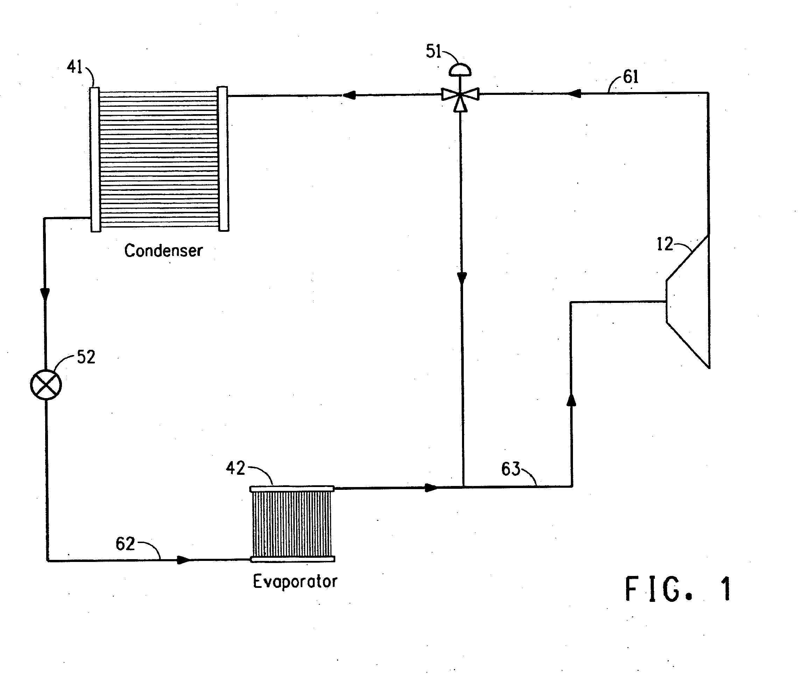

According to the present invention, there is provided a refrigeration or air-conditioning system. Such a system, which is a vapor compression system, is shown in Fig. 1. A vapor-compression system is a closed loop system which re-uses refrigerant in multiple steps producing a cooling effect in one step and a heating effect in a different step. Such a system generally includes an evaporator, a compressor, a condenser and an expansion device, as will be described below in detail with respect to Fig. 1. With reference to Fig. 1, gaseous refrigerant from an evaporator (42) flows through a hose (63) to the inlet of a compressor (12), and is then discharged. Various types of compressors may be used with the present invention, including reciprocating, rotary, jet, centrifugal, scroll, screw or axial-flow, depending on the mechanical means to compress the fluid, or as positive-displacement (e.g., reciprocating, scroll or screw) or dynamic (e.g., centrifugal or jet).

The compressed refrigerant gas from the compressor flows through the compressor outlet and through a hose (61) to a condenser (41). A pressure regulating valve (51) in hose (61) may be used. This valve allows recycle of the refrigerant flow back to the compressor via a hose (63), thereby providing the ability to control the pressure of the refrigerant reaching the condenser (41) and if necessary to prevent compressor surge. The compressed refrigerant is condensed in the condenser, thus giving off heat. The liquid refrigerant flows through an expansion device (52) via a hose (62) to the evaporator (42), which is located in the passenger compartment. In the evaporator, the liquid refrigerant is vaporized, providing cooling and the cycle then repeats. The expansion device (52) may be an expansion valve, a capillary tube or an orifice tube.

The closed loop, vapor compression system of the present invention may be used in either stationary or mobile refrigeration or air-conditioning applications. Stationary refrigeration apparatus or stationary air-conditioning apparatus refer to the equipment used for cooling the air in a building, or cooling perishable goods such as foods, pharmaceutical materials, etc, in a conventional, non-mobile, non-vehicle mounted system. These systems may include chillers, ducted and ductless air conditioners and heat pumps, domestic refrigerators and freezers, commercial refrigerators and freezers, supermarket and industrial refrigeration systems.

Such stationary refrigeration or air conditioning systems may be associated with CHP (Combined Heat and Power) systems, wherein a stationary internal combustion engine is used to drive an electrical generator. The waste heat produced by the engine may be recovered and used to perform work, by such means as a Rankine Cycle (steam engine) or Organic Rankine cycle (ORC). In a Rankine cycle, the heat is used to vaporize a liquid (an organic liquid in the case of an ORC), which in turn drives a turbine. The mechanical energy of the turbine may be used to drive an electricity generator, which runs a refrigeration or air-conditioning system.

Mobile refrigeration apparatus or mobile air-conditioning apparatus refers to any refrigeration or air-conditioning apparatus incorporated into a mobile transportation unit for the road, rail, sea or air. In addition, apparatus, which are meant to provide refrigeration or air-conditioning for a system independent of any moving carrier, known as "intermodal" systems, are included in the present invention. Such intermodal systems include "containers" (combined sea/land transport) as well as "swap bodies" (combined road and rail transport). The present invention is particularly useful for road transport refrigerating or air-conditioning apparatus, such as automobile air-conditioning apparatus or refrigerated road transport equipment.

A body to be cooled may be any space, location or object requiring refrigeration or air-conditioning. In stationary applications the body may be the interior of a structure, i.e. residential or commercial, or a storage location for perishables, such as food or pharmaceuticals. Numerous mobile systems are described earlier in defining mobile refrigeration apparatus and mobile air-conditioning apparatus.

The refrigeration apparatus or air-conditioning apparatus of the present invention may additionally employ fin and tube heat exchangers, microchannel heat exchangers and vertical or horizontal single pass tube or plate type heat exchangers in the evaporator and/or the condenser.

In accordance with the present invention, there is provided a method of providing transport of a heat transfer fluid within a refrigeration or air conditioning system, comprising circulating a heat transfer fluid composition through one or more hoses of said system. In one embodiment of the present invention, the hose may comprise an outer layer comprising a material selected from the group consisting of an elastomer and a polyamide. The hose may further comprise an inner layer comprising a material selected from the group consisting of an elastomer, a polyamide and a thermoplastic. In particular, the inner layer may comprise a thermoplastic veneer, and the outer layer may comprise an elastomer.

In a particular configuration of the present invention, hoses are constructed in multiple layers such as described below from the innermost to the outermost surface, including:
- an layer of a thermoplastic veneer;
- a tie layer;
- a metal-polymer laminate consisting of a layer of polymer compatible with the tie layer, a thin layer of metallic foil, and another layer of a polymer protecting the metallic foil;
- a braid under-layer of a thermoplastic or thermosetting elastomer;
- a braid layer providing reinforcement; and
- an outer layer of an elastomeric material.

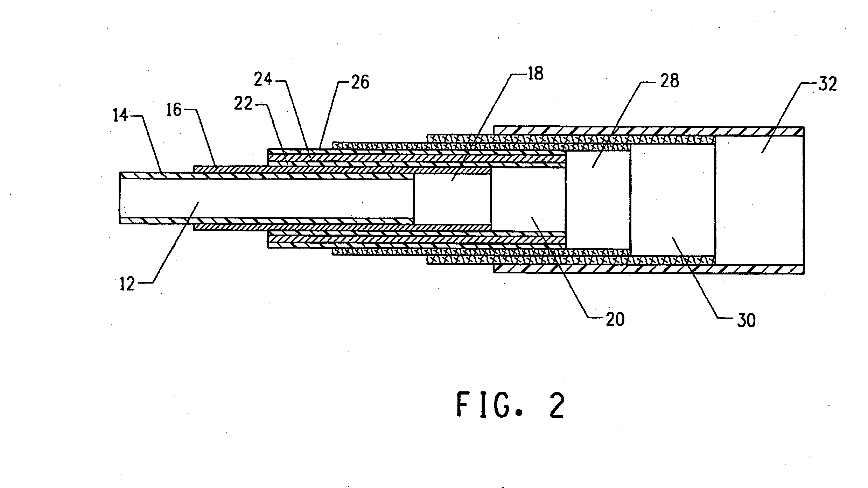

Reference is made to Fig. 2, in which this embodiment is shown. In Fig. 2, there is shown generally at 10 each of the layers of the invention, numbered and described from the innermost layer to the outermost layer. Hence, there is first depicted closest to the core (where the mandrel is inserted and then later withdrawn) an innermost layer of a thermoplastic veneer 12 having an inner surface 14 and an outer surface 16. The veneer may incorporate a tie layer 18 positioned at its outer surface 16. A metal-polymer laminate 20 is positioned over the tie layer and consisting of a layer 22 of polymer compatible with or bondable to the outer surface of the veneer, a thin layer 24 of metallic foil, and another layer 26 of a polymer protecting the metallic foil. Thereafter, a braid under-layer 28 is positioned over the metal-polymer laminate 20 and consisting of an elastomeric material. A reinforcing braid layer 30 is then positioned over the braid under-layer 28. Finally, an outer layer 32 of an elastomeric material positioned over the reinforcing braid layer 30.

The hose of this one embodiment of the present invention is manufactured in multiple steps, sequenced as provided below.

Step 1 - First a mandrel or a solid rod or other suitable structure is provided that serves as a support through the subsequent manufacturing steps. Such mandrels are commonly used in the manufacture of hoses made out of thermosetting materials that need to be supported during the extrusion and curing steps. They are made of a variety of thermoplastic or thermosetting materials such as copolyester ethers, copolyamides, polyolefins, TPVs, EPDMs, synthetic rubbers etc. It is desirable to ensure that the mandrel has sufficient flexibility to be spoolable in long lengths.

Step 2 - A thermoplastic veneer is extruded over the mandrel. The veneer can be in the form of a monolayer or a two layer tube depending on the type of metal foil and polymer laminate to be used in step 3 as explained below. It should not develop adhesion to the mandrel surface so that mandrel can be extracted at the end of hose fabrication. As appropriate, one of skill in the field can apply suitable release agents to the mandrel to facilitate the nonadhesive properties of the mandrel in relation to the inner layer of the veneer and lubricate its extraction at the end of hose fabrication.

A monolayer veneer or the inner layer of the two-layer veneer can be made of a polyamide, copolyamide, polyphthalamide, polyester or copolyester that provides chemical and thermal resistance to the contained fluid it is in contact with.

When a monolayer veneer is used, the laminate used in step 3 is provided with an adhesive that can bond to the surface of the veneer. Examples of such laminates are those where metallic foil is laminated with a pressure sensitive adhesive (PSA) that can adhere to the surface of the veneer. Such laminates are available commercially with variety of adhesives such as acrylics, rubber, silicones etc.

In a two-layer veneer construction, the outer layer is made of a functionalized polymer to function as a tie layer between the inner thermoplastic veneer and the metal-polymer laminate to be provided over it. It can be made of a functionalized polyolefin or copolyolefin such as those made by grafting or copolymerizing functional monomers with olefins and copolyolefins. Some examples of functional monomers include those with acid, anhydride, acrylate, epoxy functionality.

When a two-layer veneer is used, the laminate used in step 3 does not need to have an adhesive surface. It is rather sufficient to have a polymeric layer at the surface that is compatible or otherwise bondable to the functionalized tie layer of the veneer.

Step 3 - A metal foil and polymer laminate consisting of a first polymer layer compatible or bondable to the surface of the veneer, a thin metallic foil and a second polymer layer (which may be identical to or different from the first polymer layer) is then applied over the assembly prepared in step 2.

Adhesion can be further promoted by application of heat and/or pressure as warranted. Heating may not be necessary if the first polymer layer of the laminate is a room temperature pressure sensitive adhesive (PSA) type. When a two-layer veneer is used along with a functionalized polyolefin as the tie layer, application of both heat and pressure are needed. In one embodiment, the assembly of Step 2 is covered by the metal foil laminate and passed through a heated die designed to apply pressure on to the assembly to form the bonding. In another embodiment, the veneer supported by the mandrel is first passed through a heating tunnel so as to raise the surface temperature of the veneer. The metal foil laminate is then applied over the veneer, and the assembly is passed through another heated die designed to apply pressure and affect bonding.

The laminate is applied over the veneer lengthwise so that it circumferentially wraps around it. The two edges of the foil positioned lengthwise along the tube are bonded tightly together and any excess foil is then trimmed to provide a fully covered assembly. This form of wrapping is preferred over the so-called helical wrap formed by winding a tape over the veneer in a helical fashion at an angle to the axis of the hose because it results in only one seam running along the length of the hose. From barrier perspective, a seam can provide potential site for permeation leak. Hence, it is desirable to minimize it's occurrence in the construction. Lengthwise wrap described above is also easier to apply especially on a small diameter tubing such as that encountered in flexible high pressure hoses.

In cases where extremely high barrier is desired, it may be advantageous to provide multiple layers of the laminate in a manner that seams do not overlap thus providing higher level of permeation barrier.

Metallic foil is thin enough to provide flexibility while resist fracture during handling. For example, it can be aluminum foil, in 1-10 micron thickness range to provide very high level of barrier while retaining flexibility. Note that this approach provides a continuous layer of metal over the tube surface unlike vapor deposition techniques which leave gaps in metal coverage resulting in inferior barrier properties.

The second layer of polymer over the metallic foil is selected to protect the surface of the metal foil and provide compatibility with the braid under-layer to be provided over it. It can be a polyamide, polyester or a polyolefin, and is selected so as to be compatible with the type of braid underlayer to be used in the next step.

Step 4 - A braid underlayer is extruded over the assembly of Step 3. The underlayer is an elastomeric material such as a natural or synthetic rubber or a thermoplastic elastomer such as thermoplastic olefin (TPO), thermoplastic ester elastomer (TEE) or a thermoplastic vulcanizate (such as ETPV or TPV, common selections in this field). Its purpose is to provide cushioning and protection against forces imposed during braiding.

It is preferable if this braid underlayer bonds to the surface of the laminate applied in step 3. This may be accomplished by several means such as ensuring that the braid underlayer material is compatible with the surface layer of the laminate, extruding a two-layer braid underlayer such that its inner layer acts as a tie layer to bond to the surface of the laminate or sequentially extruding a tie layer over the laminate first and then the braid underlayer.

A functionalized polymer such as that used for forming the tie layer of the two-layer veneer of step 2 may be used for this purpose, the functionalization chosen to be compatible with the two layers to be bonded.

Step 5 - A braided reinforcement layer is provided over the assembly of Step 4. Depending on the desired pressure capability, braiding can be made of metallic or polymeric filaments or high performance filaments such as Kevlar^{®} or Nomex^{®}, both commercially available from E.I. du Pont de Nemours and Company of Wilmington, Delaware. Braid density is determined according to desired pressure capability and filament material selection. Multiple layers of braid and hybrid braids of multiple types of filaments are often used in practice to maximize the degree of reinforcement while optimizing the cost.

Step 6 - An outer protective layer is extruded over the braided reinforcement layer. This layer can again be made of an elastomeric material such as TPO, TEE or a thermoplastic vulcanizate (ETPV or TPV).

Step 7 - If any of the layers in the hose construction are made of a thermosetting material, then the assembly of Step 6 needs to cure. If all the layers are made of thermoplastic materials, then curing is not necessary. Note that one or more outer protective layers can be added at this time as well.

Step 8 - Finally, the mandrel is extracted from the assembly of Step 6 or Step 7 to produce the finished hose. The mandrel can be extracted by applying hydraulic pressure to one end of the hose or by mechanical means.

Hose made this way can be cut to desired length and fittings can be applied as desired. The hose made this way provides flexibility, high pressure capability and very high barrier capability.

It is readily apparent to those having skill in the art to which this invention pertains that in addition to the materials mentioned herein, a variety of other materials are suitable for each layer as is well known and understood. Likewise, representative thicknesses of each layer and techniques for braiding are already well appreciated by those having skill in the field, and are selected according to the intended application.

In accordance with the method of the present invention, the heat transfer fluid composition comprises a compound selected from the group consisting of: R32, R152a, CF₃I, 1234yf, 1225ye and trans-1234ze.

In certain embodiments of the invention, hereinafter referred to as the fluorolefin embodiment, the heat transfer fluid composition comprises at least one fluoroolefin. The heat transfer fluid compositions of the present invention may further comprise at least one additional component that may be a second fluoroolefin, hydrofluorocarbon (HFC), hydrocarbon, dimethyl ether, bis(trifluoromethyl)sulfide, CF₃I, or CO₂.

According to a particular aspect of the fluoroolefin embodiment, the heat transfer fluid composition comprises 1225ye and at least one additional compound selected from the group consisting of HFC-1234ze, HFC-1234yf, HFC-1234ye, HFC-1243zf, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF₃SCF₃, CO₂, NH₃, and CF₃I.

According to another particular aspect of the fluoroolefin embodiment, the heat transfer fluid composition comprises HFC-1234ze and at least one additional compound selected from the group consisting of HFC-1234yf, HFC-1234ye, HFC-1243zf, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF₃SCF₃, CO₂ and CF₃I.

In another particular aspect of the fluoroolefin embodiment, the heat transfer fluid composition comprises HFC-1234yf and at least one additional compound selected from the group consisting of HFC-1234ye, HFC-1243zf, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF3sCF₃, CO₂, NH₃, and CF₃I.

According to another particular aspect of the fluoroolefin embodiment, the heat transfer fluid composition comprises HFC-1243zf and at least one additional compound selected from the group consisting of HFC-1234ye, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF₃SCF₃, CO₂ and CF₃I.

In another particular aspect of the fluoroolefin embodiment, the heat transfer fluid composition comprises HFC-1234ye and at least one additional compound selected from the group consisting of HFC-1243zf, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF₃SCF₃, CO₂ and CF₃I.

For these particular embodiments, the fluoroolefin and the other components of the heat transfer fluid compositions of the present invention are listed in Table 1.

**TABLE 1**

| **Compound** | **Chemical name** | **Chemical formula** |
|---|---|---|
| HFC-1225ye | 1,2,3,3,3-pentafluoropropene | CF₃CF=CHF |
| HFC-1234ze | 1,3,3,3-tetrafluoropropene | CF₃CH=CHF |
| HFC-1234yf | 2,3,3,3-tetrafluoropropene | CF₃CF=CH₂ |
| HFC-1234ye | 1,2,3,3-tetrafluoropropene | CHF₂CF=CHF |
| HFC-1243zf | 3,3,3-trifluoropropene | CF₃CH=CH₂ |
| HFC-32 | difluoromethane | CH₂F₂ |
| HFC-125 | pentafluoroethane | CF₃CHF₂ |
| HFC-134 | 1,1,2,2-tetrafluoroethane | CHF₂CHF₂ |
| HFC-134a | 1,1,1,2-tetrafluoroethane | CH₂FCF₃ |
| HFC-143a | 1,1,1-trifluoroethane | CH₃CF₃ |
| HFC-152a | 1,1-difluoroethane | CHF₂CH₃ |
| HFC-161 | fluoroethane | CH₃CH₂F |
| HFC-227ea | 1,1,1,2,3,3,3-heptafluoropropane | CF₃CHFCF₃ |
| HFC-236ea | 1,1,1,2,3,3-hexafluoropropane | CF₃CHFCHF₂ |
| HFC-236fa | 1,1,1,3,3,3-hexafluoroethane | CF₃CH₂CF₃ |
| HFC-245fa | 1,1,1,3,3-pentafluoropropane | CF₃CH₂CHF₂ |
| HFC-365mfc | 1,1,1,3,3-pentafluorobutane | CF₃CH₂CH₂CHF₂ |
| | Propane | CH₃CH₂CH₃ |
| | n-butane | CH₃CH₂CH₂CH₃ |
| i-butane | isobutane | CH₃CH(CH₃)CH₃ |
| | 2-methyl butane | CH₃CH(CH₃)CH₂CH₃ |
| | n-pentane | CH₃CH₂CH₂CH₂CH₃ |
| | cyclopentane | cyclo-(CH₂)₅₋ |
| DME | dimethylether | CH₃OCH₃ |
| CO₂ | carbon dioxide | CO₂ |
| CF₃SCF₃ | bis(trifluoromethyl)sulfide | CF₃SCF₃ |
| | iodotrifluoromethane | CFl₃ |
| R717 | Ammonia | NH₃ |

The individual components listed in Table 1 may be prepared by methods known in the art.

The fluoroolefin compounds used in the compositions of the present invention, HFC-1225ye, HFC-1234ze, and HFC-1234ye, may exist as different configurational isomers or stereoisomers. The present invention is intended to include all single configurational isomers, single stereoisomers or any combination or mixture thereof. For instance, 1,3,3,3-tetra-fluoropropene (HFC-1234ze) is meant to represent the cis-isomer, trans-isomer, or any combination or mixture of both isomers in any ratio. Another example is HFC-1225ye, by which is represented the cis-isomer, trans-isomer, or any combination or mixture of both isomers in any ratio. The compositions of the present invention contain primarily the cis or Z isomer of HFC-1225ye.

The heat transfer fluid compositions of the present invention may be generally useful when the fluoroolefin is present at about 1 weight percent to about 99 weight percent, preferably about 20 weight percent to about 99 weight percent, more preferably about 40 weight percent to about 99 weight percent and still more preferably 50 weight percent to about 99 weight percent.

The present invention further provides compositions as listed in Table 2.

**TABLE 2**

| **Components** | **Concentration ranges (wt%)** | | |
|---|---|---|---|
| | **Preferred** | **More preferred** | **Most preferred** |
| HFC-1225ye/HFC-32 | 1-99/99-1 | 30-99/70-1 | 90-99/10-1; 95/5/97/3 |
| HFC-1225ye/HFC-134a | 1-99/99-1 | 40-99/60-1 | 90/10 |
| HFC-1225ye/CO₂ | 0.1-99.9/99.9-0.1 | 70-99.7/30-0.3 | 99/1 |
| HFC-1225ye/ammonia | 0.1-99.9/0.1-99.9 | 40-99.9/0.1-60 | 90/10,85/15,80/20, 95/5 |
| HFC-1225ye/HFC-1234yf | 1-99/99-1 | 51-99/49-1 and 60-90/40-10 | 60/40, 51/49 |
| HFC-1225ye/HFC-152a/HFC-32 | 1-98/1-98/1-98 | 50-98/1-40/1-40 | 85/10/5 |
| | | | 81/15/4 |
| | | | 82/15/3 |
| HFC-1225ye/HFC-152a/CO₂ | 1-98/1-98/0.1-98 | 50-98/1-40/0.3-30 | 84/15/1 |
| | | | 84/15.5/0.5 |
| HFC-1225ye/HFC-152a/propane | 1-98/1-98/1-98 | 50-98/1-40/1-20 | 85/13/2 |
| HFC-1225ye/HFC-152a/i-butane | 1-98/1-98/1-98 | 50-98/1-40/1-20 | 85/13/2 |
| HFC-1225ye/HFC-152a/DME | 1-98/1-98/1-98 | 50-98/1-40/1-20 | 85/13/2 |
| HFC-1225ye/HFC-152a/CF₃l | -98/1-98/1-98 | 20-90/1-50/1-60 | |
| HFC-1225ye/HFC-134a/HFC-152a | 1-98/1-98/1-98 | 40-98/1-50/1-40 | 76/9/15 |
| HFC-1225ye/HFC-134a/HFC-32 | 1-98/1-98/1-98 | 1-80/1-80/1-80 | 88/9/3 |
| HFC-1225ye/HFC-134a/HFC-161 | 1-98/1-98/1-98 | 40-98/1-50/1-20 | 86/10/4 |
| HFC-1225ye/HFC-134a/CO₂ | 1-98/1-98/0.1-98 | 40-98/1-50/0.3-30 | 88.5/11/0.5 |
| HFC-1225ye/HFC-134a/propane | 1-98/1-98/1-98 | 40-98/1-50/ 1-20 | 87/10/3 |
| HFC-1225ye/HFC-134a/i-butane | 1-98/1-98/1-98 | 40-98/1-50/1-20 | 87/10/3 |
| HFC-1225ye/HFC-134a/DME | 1-98/1-98/1-98 | 40-98/1-50/1-20 | 87/10/3 |
| HFC-1225ye/HFC-134/HFC-32 | 1-98/1-98/1-98 | 40-98/1-50/1-40 | 88/9/3 |
| trans-HFC-1234ze/HFC-134a | 1-99/99-1 | 30-99/70-1 | 90/10 |
| trans-HFC-1234ze/HFC-32 | 1-99/99-1 | 40-99/60-1 | 95/5 |
| trans-HFC-1234ze/HFC-32/CF₃l | -98/1-98/1-98 | 20-90/0.1-60/1-70 | |
| trans-HFC-1234ze/HFC-152a | 1-99/99-1 | 40-99/60-1 | 80/20 |
| trans-HFC-1234ze/HFC-125 | 1-99/99-1 | 30-99/70-1 | |
| HFC-1234yf/HFC-134a | 1-99/99-1 | 30-99/70-1 | 90/10 |
| HFC-1234yf/HFC-32 | 1-99/99-1 | 40-99/60-1 | 95/5 |
| HFC-1234yf/HFC-125 | 0.1-99/99-0.1 | 52-99/48-1 | |
| HFC-1234yf/HFC-152a | 1-99/99-1 | 40-99/60-1 | 80/20 |
| HFC-1225ye/HFC-134a/HFC-152a/HFC-32 | 1-97/1-97/1-97/0.1-97 | 20-97/1-80/1-50/0.1-50 | 74/8/17/1 |
| HFC-1225ye/HFC-1234yf/HFC-134a | 1-98/1-98/0.1-98 | 10-90/10-90/0.1-50 | 70/20/10 and 20/70/10 |
| HFC-1225ye/HFC-1234yf/HFC-32 | 1-98/1-98/0.1-98 | 10-90/5-90/0.1-50 | 25/73/2, 75/23/2, 49/49/2,85/10/5, 90/5/5 |
| HFC-1225ye/HFC-1234yf/HFC-32/CF₃l | 1-97/1-97/0.1-97/1-97 | 10-80/10-80/1-60/1-60 | |
| HFC-1225ye/HFC-1234yf/HFC-152a | 1-98/1-98/0.1-98 | 10-90/10-90/0.1-50 | 70/25/5 and 25/70/5 |
| H FC-1225ye/HFC-1234yf/HFC-125 | 1-98/1-98/0.1-98 | 10-90/10-90/0.1-50 | 25/71/4, 75/21/4, 75/24/1 and 25/74/1 |
| HFC-1225ye/HFC-1234yf/ CF₃l | -98/1-98/1-98 | 9-90/9-90/1-60 | 40/40/20 and 45/45/10 |
| HFC-32/HFC-125/HFC-1225ye | 0.1-98/0.1-98/0.1-98 | 5-70/5-70/5-70 | 30/30/40 and 23/25/52 |
| HFC-32/HFC-125/trans-HFC-1234ze | 0.1-98/0.1-98/0.1-98 | 5-70/5-70/5-70 | 30/50/20 and 23/25/52 |
| HFC-32/HFC-125/HFC-1234yf | 0.1-98/0.1-98/0.1-98 | 5-70/5-70/5-70 | 40/50/10, 23/25/52, 15/45/40, and 10/60/30 |
| HFC-32/HFC-134a/HFC-1225ye/CF₃l | -97/1-97/1-97/1-97 | 1-60/1-60/1-60/1-60 | |
| HFC-32/HFC-134a/HFC-1225ye/HFC-1234yf/CF₃l | 1-96/1-96/1-96/1-96/1-96 | 1-50/1-50/1-50/1-50/1-50 | |
| HFC-32/HFC-125/HFC-134a/HFC-1225ye/CF₃l | -96/1-96/1-96/1-96/1-96 | 1-50/1-50/1-50/1-50/1-50 | |
| HFC-125/HFC-1225ye/n-butane | 0.1-98/0.1-98/0.1-98 | 5-70/5-70/1-20 | 65/32/3 and 85.1/11.5/3.4 |
| HFC-32/NH₃/HFC-1225ye | 1-98/1-98/1-98 | 1-60/10-60/10-90 | |
| HFC-32/NH₃/HFC-1225ye/CF₃l | 1-97/1-97/1-97/1-97 | 1-60/1-60/10-80/1-60 | |
| HFC-32/NH₃/HFC-1234yf/CF₃l | -97/1-97/1-97 /1-97 | 1-60/1-60/10-80/5-80 | |
| HFC-125/trans-HFC-1234ze/n-butane | 0.1-98/0.1-98/0.1-98 | 5-70/5-70/1-20 | 66/32/2 and 86.1/11.5/2.4 |
| HFC-125/HFC-1234yf/n-butane | 0.1-98/0.1-98/0.1-98 | 5-70/5-70/1-20 | 67/32/1 and 87.1/11.5/1.4 |
| HFC-125/HFC-1225ye/isobutane | 0.1-98/0.1-98/0.1-98 | 5-70/5-70/1-20 | 85.1/11.5/3.4 and 65/32/3 |
| HFC-1225ye/HFC-125/ammonia | 0.1-98/0.1-98/0.1-98 | 20-98/1-60/0.1-40 | |
| HFC-1225ye/HFC-32/HFC-125/ammonia | 0.1-97/0.1-97/0.1-97/0.1-97 | 20-97/1-60/1-60/0.1-40 | |
| HFC-125/trans-HFC-1234ze/isobutane | 0.1-98/0.1-98/0.1-98 | 5-70/5-70/1-20 | 86.1/11.5/2.4 and 66/32/2 |
| HFC-125/HFC-1234yf/isobutane | 0.1-98/0.1-98/0.1-98 | 5-70/5-70/1-20 and 80-98/1-19/1-10 | 87.1/11.5/1.4 and 67/32/1 |
| HFC-1234yf/HFC-32/HFC-143a | 1-50/1-98/1-98 | 15-50/20-80/5-60 | |
| HFC-1234yf/HFC-32/isobutane | 1-40/59-98/1-30 | 10-40/59-90/1-10 | |
| HFC-1234yf/HFC-125/HFC-143a | 1-60/1-98/1-98 | 10-60/20-70/20-70 | |
| HFC-1234yf/HFC-125/isobutane | 1-40/59-98/1-20 | 10-40/59-90/1-10 | |
| HFC-1234yf/HFC-125/CF₃l | 1-98/0.1-98/1-98 | 10-80/1-60/1-60 | |
| HFC-1234yf/HFC-134/propane | 1-80/1-70/19-90 | 20-80/10-70/19-50 | |
| HFC-1234yf/HFC-134/DME | 1-70/1-98/29-98 | 20-70/10-70/29-50 | |
| HFC-1234yf/HFC-134a/propane | 1-80/1-80/19-98 | 10-80/10-80/19-50 | |
| HFC-1234yf/HFC-134a/n-butane | 1-98/1-98/1-30 | 10-80/10-80/1-20 | |
| HFC-1234yf/HFC-134a/isobutane | 1-98/1-98/1-30 | 10-80/10-80/1-20 | |
| HFC-1234yf/HFC-134a/DME | 1-98/1-98/1-40 | 10-80/10-80/1-20 | |
| HFC-1234yf/HFC-134a/CF₃l | 1-98/1-98/1-98 | 10-80/1-60/1-60 | |
| HFC-1234yf/HFC-143a/propane | 1-80/1-98/1-98 | 10-80/10-80/1-50 | |
| HFC-1234yf/HFC-143a/DME | 1-40/59-98/1-20 | 5-40/59-90/1-10 | |
| HFC-1234yf/HFC-152a/n-butane | 1-98/1-98/1-30 | 10-80/10-80/1-20 | |
| HFC-1234yf/HFC-152a/isobutane | 1-98/1-90/1-40 | 10-80/10-80/1-20 | |
| HFC-1234yf/HFC-152a/DME | 1-70/1-98/1-98 | 10-70/10-80/1-20 | |
| HFC-1234yf/HFC-152a/CF₃l | 1-98/1-98/1-98 | 10-80/1-60/1-60 | |
| HFC-1234yf/HFC-227ea/propane | 1-80/1-70/29-98 | 10-60/10-60/29-50 | |
| HFC-1234yf/HFC-227ea/n-butane | 40-98/1-59/1-20 | 50-98/10-49/1-10 | |
| HFC-1234yf/HFC-227ea/isobutane | 30-98/1-69/1-30 | 50-98/10-49/1-10 | |
| HFC-1234yf/HFC-227ea/DME | 1-98/1-80/1-98 | 10-80/10-80/1-20 | |
| HFC-1234yf/n-butane/DME | 1-98/1-40/1-98 | 10-80/10-40/1-20 | |
| HFC-1234yf/isobutane/DME | 1-98/1-50/1-98 | 10-90/1-40/1-20 | |
| HFC-1234yf/DME/CF₃l | 1-98/1-98/1-98 | 10-80/1-20/10-80 | |
| HFC-1234yf/DME/CF₃SCF₃ | 1-98/1-40/1-98 | 10-80/1-20/10-70 | |
| HFC-1225ye/trans-HFC-1234ze/HFC-134 | 1-98/1-98/1-98 | 10-80/10-80/10-80 | |
| HFC-1225ye/trans-HFC-1234ze/HFC-227ea | 1-98/1-98/1-98 | 10-80/10-80/10-80 | |
| HFC-1225ye/trans-HFC-1234ze/propane | 1-60/1-60/39-98 | 10-60/10-60/39-80 | |
| HFC-1225ye/trans-HFC-1234ze/n-butane | 1-98/1-98/1-30 | 10-80/10-80/1-20 | |
| HFC-1225ye/trans-HFC-1234ze/DME | 1-98/1-98/1-98 | 10-80/10-80/1-30 | |
| HFC-1225ye/trans-HFC-1234ze/CF₃SCF₃ | 1-98/1-98/1-98 | 10-80/10-80/10-80 | |
| H FC-1225ye/H FC-1243zf/H FC-134 | 1-98/1-98/1-98 | 10-80/10-80/10-80 | |
| HFC-1225ye/HFC-1243zf/n-butane | 1-98/1-98/1-30 | 10-80/10-80/1-20 | |
| HFC-1225ye/HFC-1243zf/isobutane | 1-98/1-98/1-40 | 10-80/10-80/1-30 | |
| HFC-1225ye/HFC-1243zf/DME | 1-98/1-98/1-98 | 10-80/10-80/1-30 | |
| H FC-1225ye/H FC-1243zf/CF31 | 1-98/1-98/1-98 | 10-80/10-80/10-80 | |
| HFC-1225ye/HFC-134/HFC-152a | 1-98/1-98/1-98 | 10-80/10-80/1-50 | |
| HFC-1225ye/HFC-134/HFC-227ea | 1-98/1-98/1-98 | 10-80/10-80/10-80 | |
| H FC-1225ye/H FC-134/n-butane | 1-98/1-90/1-40 | 10-80/10-80/1-30 | |
| HFC-1225ye/HFC-134/isobutane | 1-98/1-90/1-40 | 10-80/10-80/1-30 | |
| HFC-1225ye/HFC-134/DME | 1-98/1-98/1-40 | 10-80/10-80/1-30 | |
| HFC-1225ye/HFC-227ea/DME | 40-98/1-59/1-30 | 50-98/1-49/1-20 | |
| HFC-1225ye/n-butane/DME | 1-98/1-30/1-98 | 60-98/1-20/1-20 | |
| HFC-1225ye/n-butane/CF₃SCF₃ | 1-98/1-20/1-98 | 10-80/1-10/10-80 | |
| HFC-1225ye/isobutane/DME | 1-98/1-60/1-98 | 40-90/1-30/1-30 | |
| HFC-1225ye/isobutane/CF₃l | 1-98/1-40/1-98 | 10-80/1-30/10-80 | |
| trans-HFC-1234ze/HFC-1243zf/HFC-227ea | 1-98/1-98/1-98 | 10-80/10-80/10-80 | |
| trans-HFC-1234ze/HFC-1243zf/n-butane | 1-98/1-98/1-30 | 10-80/10-80/1-20 | |
| trans-HFC-1234ze/HFC-1243zf/isobutane | 1-98/1-98/1-40 | 10-80/10-80/1-30 | |
| trans-HFC-1234ze/HFC-1243zf/DME | 1-98/1-98/1-98 | 10-80/10-80/1-40 | |
| trans-HFC-1234ze/HFC-32/CF3l | 1-98/1-98/1-98 | 10-80/1-70/1-80 | |
| trans-HFC-1234ze/HFC-134/HFC-152a | 1-98/1-98/1-98 | 10-80/10-80/1-50 | |
| trans-HFC-1234ze/HFC-134/HFC-227ea | 1-98/1-98/1-98 | 10-80/10-80/10-80 | |
| trans-HFC-1234ze/HFC-134/DME | 1-98/1-98/1-40 | 10-80/10-80/1-30 | |
| trans-HFC-1234ze/HFC-134a/HFC-152a | 1-98/1-98/1-98 | 10-80/10-80/1-50 | |
| trans-HFC-1234ze/HFC-152a/n-butane | 1-98/1-98/1-50 | 10-80/10-80/1-30 | |
| trans-HFC-1234ze/HFC-152a/DME | 1-98/1-98/1-98 | 20-90/1-50/1-30 | |
| trans-H FC-1234ze/H FC-227ea/n-butane | 1-98/1-98/1-40 | 10-80/10-80/1-30 | |
| trans-HFC-1234ze/n-butane/DME | 1-98/1-40/1-98 | 10-90/1-30/1-30 | |
| trans-HFC-1234ze/n-butane/CF₃l | 1-98/1-30/1-98 | 10-80/1-20/10-80 | |
| trans-HFC-1234ze/isobutane/DME | 1-98/1-60/1-98 | 10-90/1-30/1-30 | |
| trans-HFC-1234ze/isobutane/CF₃l | 1-98/1-40/1-98 | 10-80/1-20/10-80 | |
| trans-HFC-1234ze/isobutane/ CF₃SCF₃ | 1-98/1-40/1-98 | 10-80/1-20/10-80 | |
| HFC-1243zf/HFC-134/HFC-227ea | 1-98/1-98/1-98 | 10-80/10-80/10-80 | |
| HFC-1243zf/HFC-134/n-butane | 1-98/1-98/1-40 | 10-80/10-80/1-30 | |
| HFC-1243zf/HFC-134/DME | 1-98/1-98/1-98 | 10-80/10-80/1-30 | |
| HFC-1243zf/HFC-134/CF₃l | 1-98/1-98/1-98 | 10-80/10-80/10-80 | |
| HFC-1243zf/HFC-134a/HFC-152a | 1-98/1-98/1-98 | 10-80/10-80/1-50 | |
| HFC-1243zf/HFC-134a/n-butane | 1-98/1-98/1-40 | 10-80/10-80/1-30 | |
| HFC-1243zf/HFC-152a/propane | 1-70/1-70/29-98 | 10-70/1-50/29-40 | |
| HFC-1243zf/HFC-152a/n-butane | 1-98/1-98/1-30 | 10-80/1-80/1-20 | |
| HFC-1243zf/HFC-152a/isobutane | 1-98/1-98/1-40 | 10-80/1-80/1-30 | |
| HFC-1243zf/HFC-152a/DME | 1-98/1-98/1-98 | 10-80/1-80/1-30 | |
| HFC-1243zf/HFC-227ea/n-butane | 1-98/1-98/1-40 | 10-80/1-80/1-30 | |
| HFC-1243zf/HFC-227ea/isobutane | 1-98/1-90/1-50 | 10-80/1-80/1-30 | |
| HFC-1243zf/HFC-227ea/DME | 1-98/1-80/1-90 | 10-80/1-80/1-30 | |
| HFC-1243zf/n-butane/DME | 1-98/1-40/1-98 | 10-90/1-30/1-30 | |
| HFC-1243zf/isobutane/DME | 1-98/1-60/1-98 | 10-90/1-30/1-30 | |
| HFC-1243zf/isobutane/CF₃l | 1-98/1-40/1-98 | 10-80/1-30/10-80 | |
| HFC-1243zf/DME/CF₃SCF₃ | 1-98/1-40/1-90 | 10-80/1-30/10-80 | |
| HFC-1225ye/HFC-32/CF₃l | 1-98/1-98/1-98 | 5-80/1-70/1-80 | |
| HFC-1225ye/HFC-1234yf/HFC-32/HFC-125 | 1-97/1-97/1-97/1-97 | 1-80/1-70/5-70/5-70 | |
| H FC-1225ye/H FC-1234yf/H FC-32/HFC-134a | 1-97/1-97/1-97/1-97 | 5-80/5-70/5-70/5-70 | |
| HFC-1225ye/HFC-1234yf/HFC-32/HFC-125/CF₃l | 1-96/1-96/1-96/1-96/1-96 | 1-70/1-60/1-70/1-60/1-60 | |
| H FC-1225ye/H FC-32/H FC-125/HFC-152a | 1-97/1-97/1-97/1-97 | 10-80/5-70/5-70/5-70 | |
| HFC-1225ye/HFC-32/HFC-125/isobutane | 1-97/1-97/1-97/1-97 | 5-70/5-70/5-70/1-30 | |
| HFC-1225ye/HFC-32/HFC-125/propane | 1-97/1-97/1-97/1-50 | 5-70/5-70/5-70/1-30 | |
| HFC-1225ye/HFC-32/HFC-125/DME | 1-97/1-97/1-97/1-50 | 5-70/5-70/5-70/1-30 | |
| HFC-1225ye/HFC-32/CF31/DM E | 1-97/1-97/1-97/1-50 | 5-70/5-70/5-70/1-30 | |
| HFC-1225ye/HFC-32/HFC-125/CF₃l | 1-97/1-97/1-97/1-97 | 10-80/5-70/5-70/1-80 | |
| HFC-1234yf/HFC-32/CF₃l | 1-98/1-98/1-98 | 10-80/1-70/1-80 | |
| HFC-1234yf/HFC-32/HFC-134a/CF₃l | 1-97/1-97/1-97/1-97 | 5-70/5-80/1-70/5-70 | |
| HFC-1234yf/HFC-32/HFC-125 | 1-98/1-98/1-98 | 10-80/5-80/10-80 | |
| HFC-1234yf/HFC-32/HFC-125/CF3l | 1-97/1-97/1-97/1-97 | 10-80/5-70/10-80/5-80 | |

The most preferred compositions of the present invention listed in Table 2 are generally expected to maintain the desired properties and functionality when the components are present in the concentrations as listed +/- 2 weight percent. The compositions containing CO₂ would be expected to maintain the desired properties and functionality when the CO₂ was present at the listed concentration +/- 0.2 weight percent.

The compositions of the present invention may be azeotropic or near-azeotropic compositions. By azeotropic composition is meant a constant-boiling mixture of two or more substances that behave as a single substance. One way to characterize an azeotropic composition is that the vapor produced by partial evaporation or distillation of the liquid has the same composition as the liquid from which it is evaporated or distilled, i.e., the mixture distills/refluxes without compositional change. Constant-boiling compositions are characterized as azeotropic because they exhibit either a maximum or minimum boiling point, as compared with that of the non-azeotropic mixture of the same compounds. An azeotropic composition will not fractionate within a refrigeration or air conditioning system during operation, which may reduce efficiency of the system. Additionally, an azeotropic composition will not fractionate upon leakage from a refrigeration or air conditioning system. In the situation where one component of a mixture is flammable, fractionation during leakage could lead to a flammable composition either within the system or outside of the system.

A near-azeotropic composition (also commonly referred to as an "azeotrope-like composition") is a substantially constant boiling liquid admixture of two or more substances that behaves essentially as a single substance. One way to characterize a near-azeotropic composition is that the vapor produced by partial evaporation or distillation of the liquid has substantially the same composition as the liquid from which it was evaporated or distilled, that is, the admixture distills/refluxes without substantial composition change. Another way to characterize a near-azeotropic composition is that the bubble point vapor pressure and the dew point vapor pressure of the composition at a particular temperature are substantially the same. Herein, a composition is near-azeotropic if, after 50 weight percent of the composition is removed, such as by evaporation or boiling off, the difference in vapor pressure between the original composition and the composition remaining after 50 weight percent of the original composition has been removed is less than about 10 percent.

Azeotropic compositions of the present invention at a specified temperature are shown in Table 3.

**TABLE 3**

| **Component A** | **Component B** | **Wt% A** | **Wt% B** | **Psia** | **kPa** | **T(C)** |
|---|---|---|---|---|---|---|
| HFC-1234yf | HFC-32 | 7.4 | 92.6 | 49.2 | 339 | -25 |
| HFC-1234yf | HFC-125 | 10.9 | 89.1 | 40.7 | 281 | -25 |
| HFC-1234yf | HFC-134a | 70.4 | 29.6 | 18.4 | 127 | -25 |
| HFC-1234yf | HFC-152a | 91.0 | 9.0 | 17.9 | 123 | -25 |
| HFC-1234yf | HFC-143a | 17.3 | 82.7 | 39.5 | 272 | -25 |
| HFC-1234yf | HFC-227ea | 84.6 | 15.4 | 18.0 | 124 | -25 |
| HFC-1234yf | propane | 51.5 | 48.5 | 33.5 | 231 | -25 |
| HFC-1234yf | n-butane | 98.1 | 1.9 | 17.9 | 123 | -25 |
| HFC-1234yf | isobutane | 88.1 | 11.9 | 19.0 | 131 | -25 |
| HFC-1234yf | DME | 53.5 | 46.5 | 13.1 | 90 | -25 |
| HFC-1225ye | trans-HFC-1234ze | 63.0 | 37.0 | 11.7 | 81 | -25 |
| HFC-1225ye | HFC-1243zf | 40.0 | 60.0 | 13.6 | 94 | -25 |
| HFC-1225ye | HFC-134 | 52.2 | 47.8 | 12.8 | 88 | -25 |
| HFC-1225ye | HFC-152a | 7.3 | 92.7 | 14.5 | 100 | -25 |
| HFC-1225ye | propane | 29.7 | 70.3 | 30.3 | 209 | -25 |
| HFC-1225ye | n-butane | 89.5 | 10.5 | 12.3 | 85 | -25 |
| HFC-1225ye | isobutane | 79.3 | 20.7 | 13.9 | 96 | -25 |
| HFC-1225ye | DME | 82.1 | 17.9 | 10.8 | 74 | -25 |
| HFC-1225ye | CF₃SCF₃ | 37.0 | 63.0 | 12.4 | 85 | -25 |
| trans- HFC-1234ze | HFC-1243zf | 17.0 | 83.0 | 13.0 | 90 | -25 |
| trans- HFC-1234ze | HFC-134 | 45.7 | 54.3 | 12.5 | 86 | -25 |
| trans- HFC-1234ze | HFC-134a | 9.5 | 90.5 | 15.5 | 107 | -25 |
| trans- HFC-1234ze | HFC-152a | 21.6 | 78.4 | 14.6 | 101 | -25 |
| trans- HFC-1234ze | HFC-227ea | 59.2 | 40.8 | 11.7 | 81 | -25 |
| trans- HFC-1234ze | propane | 28.5 | 71.5 | 30.3 | 209 | -25 |
| trans- HFC-1234ze | n-butane | 88.6 | 11.4 | 11.9 | 82 | -25 |
| trans- HFC-1234ze | isobutane | 77.9 | 22.1 | 12.9 | 89 | -25 |
| trans- HFC-1234ze | DME | 84.1 | 15.9 | 10.8 | 74 | -25 |
| trans- HFC-1234ze | CF₃SCF₃ | 34.3 | 65.7 | 12.7 | 88 | -25 |
| HFC-1243zf | HFC-134 | 63.0 | 37.0 | 13.5 | 93 | -25 |
| HFC-1243zf | HFC-134A | 25.1 | 74.9 | 15.9 | 110 | -25 |
| HFC-1243zf | HFC-152A | 40.7 | 59.3 | 15.2 | 104 | -25 |
| HFC-1243zf | HFC-227ea | 78.5 | 21.5 | 13.1 | 90 | -25 |
| HFC-1243zf | propane | 32.8 | 67.2 | 31.0 | 213 | -25 |
| HFC-1243zf | n-butane | 90.3 | 9.7 | 13.5 | 93 | -25 |
| HFC-1243zf | isobutane | 80.7 | 19.3 | 14.3 | 98 | -25 |
| HFC-1243zf | DME | 72.7 | 27.3 | 12.0 | 83 | -25 |
| cis- HFC-1234ze | HFC-236ea | 20.9 | 79.1 | 30.3 | 209 | 25 |
| cis- HFC-1234ze | HFC-245fa | 76.2 | 23.8 | 26.1 | 180 | 25 |
| cis- HFC-1234ze | n-butane | 51.4 | 48.6 | 6.08 | 42 | -25 |
| cis- HFC-1234ze | isobutane | 26.2 | 73.8 | 8.74 | 60 | -25 |
| cis- HFC-1234ze | 2-methyl butane | 86.6 | 13.4 | 27.2 | 188 | 25 |
| cis- HFC-1234ze | n-pentane | 92.9 | 7.1 | 26.2 | 181 | 25 |
| HFC-1234ye | HFC-236ea | 24.0 | 76.0 | 3.35 | 23.1 | -25 |
| HFC-1234ye | HFC-245fa | 42.5 | 57.5 | 22.8 | 157 | 25 |
| HFC-1234ye | n-butane | 41.2 | 58.8 | 38.0 | 262 | 25 |
| HFC-1234ye | isobutane | 16.4 | 83.6 | 50.9 | 351 | 25 |
| HFC-1234ye | 2-methyl butane | 80.3 | 19.7 | 23.1 | 159 | 25 |
| HFC-1234ye | n-pentane | 87.7 | 12.3 | 21.8 | 150 | 25 |

Additionally, ternary azeotropes composition have been found as listed in Table 4.

**TABLE 4**

| Component A | Component B | Component C | Wt% A | Wt% B | Wt% C | Pres (psi) | Pres (kPa) | Temp (°C) |
|---|---|---|---|---|---|---|---|---|
| HFC-1234yf | HFC-32 | HFC-143A | 3.9 | 74.3 | 21.8 | 50.02 | 345 | -25 |
| HFC-1234yf | HFC-32 | isobutane | 1.1 | 92.1 | 6.8 | 50.05 | 345 | -25 |
| HFC-1234yf | HFC-125 | HFC-143A | 14.4 | 43.5 | 42.1 | 38.62 | 266 | -25 |
| HFC-1234yf | HFC-125 | isobutane | 9.7 | 89.1 | 1.2 | 40.81 | 281 | -25 |
| HFC-1234yf | HFC-134 | propane | 4.3 | 39.1 | 56.7 | 34.30 | 236 | -25 |
| HFC-1234yf | HFC-134 | DME | 15.2 | 67.0 | 17.8 | 10.38 | 71.6 | -25 |
| HFC-1234yf | HFC-134a | propane | 24.5 | 31.1 | 44.5 | 34.01 | 234 | -25 |
| HFC-1234yf | HFC-134a | n-butane | 60.3 | 35.2 | 4.5 | 18.58 | 128 | -25 |
| HFC-1234yf | HFC-134a | isobutane | 48.6 | 37.2 | 14.3 | 19.86 | 137 | -25 |
| HFC-1234yf | HFC-134a | DME | 24.0 | 67.9 | 8.1 | 17.21 | 119 | -25 |
| HFC-1234yf | HFC-143a | propane | 17.7 | 71.0 | 11.3 | 40.42 | 279 | -25 |
| HFC-1234yf | HFC-143a | DME | 5.7 | 93.0 | 1.3 | 39.08 | 269 | -25 |
| HFC-1234yf | HFC-152a | n-butane | 86.6 | 10.8 | 2.7 | 17.97 | 124 | -25 |
| HFC-1234yf | HFC-152a | isobutane | 75.3 | 11.8 | 12.9 | 19.12 | 132 | -25 |
| HFC-1234yf | HFC-152a | DME | 24.6 | 43.3 | 32.1 | 11.78 | 81.2 | -25 |
| HFC-1234yf | HFC-227ea | propane | 35.6 | 17.8 | 46.7 | 33.84 | 233 | -25 |
| HFC-1234yf | HFC-227ea | n-butane | 81.9 | 16.0 | 2.1 | 18.07 | 125 | -25 |
| HFC-1234yf | HFC-227ea | isobutane | 70.2 | 18.2 | 11.6 | 19.27 | 133 | -25 |
| HFC-1234yf | HFC-227ea | DME | 28.3 | 55.6 | 16.1 | 15.02 | 104 | -25 |
| HFC-1234yf | n-butane | DME | 48.9 | 4.6 | 46.4 | 13.15 | 90.7 | -25 |
| HFC-1234yf | isobutane | DME | 31.2 | 26.2 | 42.6 | 14.19 | 97.8 | -25 |
| HFC-1234yf | DME | CF₃I | 16.3 | 10.0 | 73.7 | 15.65 | 108 | -25 |
| HFC-1234yf | DME | CF₃SCF₃ | 34.3 | 10.5 | 55.2 | 14.57 | 100 | -25 |
| HFC-1225ye | trans-HFC-1234ze | HFC-134 | 47.4 | 5.6 | 47.0 | 12.77 | 88.0 | -25 |
| HFC-1225ye | trans-HFC-1234ze | HFC-227ea | 28.4 | 52.6 | 19.0 | 11.63 | 80.2 | -25 |
| HFC-1225ye | trans-HFC-1234ze | propane | 20.9 | 9.1 | 70.0 | 30.36 | 209 | -25 |
| HFC-1225ye | trans-HFC-1234ze | n-butane | 65.8 | 24.1 | 10.1 | 12.39 | 85.4 | -25 |
| HFC-1225ye | trans-HFC-1234ze | DME | 41.0 | 40.1 | 18.9 | 10.98 | 75.7 | -25 |
| HFC-1225ye | trans-HFC-1234ze | CF₃SCF₃ | 1.0 | 33.7 | 65.2 | 12.66 | 87.3 | -25 |
| HFC-1225ye | HFC-1243zf | HFC-134 | 28.7 | 47.3 | 24.1 | 13.80 | 95.1 | -25 |
| HFC-1225ye | HFC-1243zf | n-butane | 37.5 | 55.0 | 7.5 | 13.95 | 96.2 | -25 |
| HFC-1225ye | HFC-1243zf | isobutane | 40.5 | 43.2 | 16.3 | 14.83 | 102 | -25 |
| HFC-1225ye | HFC-1243zf | DME | 19.1 | 51.0 | 29.9 | 12.15 | 83.8 | -25 |
| HFC-1225ye | HFC-1243zf | CF₃I | 10.3 | 27.3 | 62.3 | 14.05 | 96.9 | -25 |
| HFC-1225ye | HFC-134 | HFC-152a | 63.6 | 26.8 | 9.6 | 12.38 | 85.4 | -25 |
| HFC-1225ye | HFC-134 | HFC-227ea | 1.3 | 52.3 | 46.4 | 12.32 | 84.9 | -25 |
| HFC-1225ye | HFC-134 | n-butane | 18.1 | 67.1 | 14.9 | 14.54 | 100 | -25 |
| HFC-1225ye | HFC-134 | isobutane | 0.7 | 74.0 | 25.3 | 16.68 | 115 | -25 |
| HFC-1225ye | HFC-134 | DME | 29.8 | 52.5 | 17.8 | 9.78 | 67.4 | -25 |
| HFC-1225ye | HFC-227ea | DME | 63.1 | 31.0 | 5.8 | 10.93 | 75.4 | -25 |
| HFC-1225ye | n-butane | DME | 66.0 | 13.0 | 21.1 | 11.34 | 78.2 | -25 |
| HFC-1225ye | n-butane | CF₃SCF₃ | 71.3 | 5.6 | 23.0 | 12.25 | 84.5 | -25 |
| HFC-1225ye | isobutane | DME | 49.9 | 29.7 | 20.4 | 12.83 | 88.5 | -25 |
| HFC-1225ye | isobutane | CF₃I | 27.7 | 2.2 | 70.1 | 13.19 | 90.9 | -25 |
| Trans-HFC-1234ze | HFC-1243zf | HFC-227ea | 7.1 | 73.7 | 19.2 | 13.11 | 90.4 | -25 |
| Trans-HFC-1234ze | HFC-1243zf | n-butane | 9.5 | 81.2 | 9.3 | 13.48 | 92.9 | -25 |
| Trans-HFC-1234ze | HFC-1243zf | isobutane | 3.3 | 77.6 | 19.1 | 14.26 | 98.3 | -25 |
| Trans-HFC-1234ze | HFC-1243zf | DME | 2.6 | 70.0 | 27.4 | 12.03 | 82.9 | -25 |
| Trans-HFC-1234ze | HFC-134 | HFC-152a | 52.0 | 42.9 | 5.1 | 12.37 | 85.3 | -25 |
| Trans-HFC-1234ze | HFC-134 | HFC-227ea | 30.0 | 43.2 | 26.8 | 12.61 | 86.9 | -25 |
| Trans-HFC-1234ze | HFC-134 | DME | 27.7 | 54.7 | 17.7 | 9.76 | 67.3 | -25 |
| Trans-HFC-1234ze | HFC-134a | HFC-152a | 14.4 | 34.7 | 51.0 | 14.42 | 99.4 | -25 |
| Trans-HFC-1234ze | HFC-152a | n-butane | 5.4 | 80.5 | 14.1 | 15.41 | 106 | -25 |
| Trans-HFC-1234ze | HFC-152a | DME | 59.1 | 16.4 | 24.5 | 10.80 | 74.5 | -25 |
| Trans-HFC-1234ze | HFC-227ea | n-butane | 40.1 | 48.5 | 11.3 | 12.61 | 86.9 | -25 |
| Trans-HFC-1234ze | n-butane | DME | 68.1 | 13.0 | 18.9 | 11.29 | 77.8 | -25 |
| Trans-HFC-1234ze | n-butane | CF₃I | 81.2 | 9.7 | 9.1 | 11.87 | 81.8 | -25 |
| Trans-HFC-1234ze | isobutane | DME | 55.5 | 28.7 | 15.8 | 12.38 | 85.4 | -25 |
| Trans-HFC-1234ze | isobutane | CF₃l | 34.9 | 6.1 | 59.0 | 12.57 | 86.7 | -25 |
| Trans-HFC-1234ze | isobutane | CF₃SCF₃ | 37.7 | 1.1 | 61.7 | 12.66 | 87.3 | -25 |
| HFC-1243zf | HFC-134 | HFC-227ea | 58.6 | 34.1 | 7.3 | 13.54 | 93.4 | -25 |
| HFC-1243zf | HFC-134 | n-butane | 27.5 | 58.7 | 13.9 | 14.72 | 101 | -25 |
| HFC-1243zf | HFC-134 | DME | 18.7 | 63.5 | 17.8 | 10.11 | 69.7 | -25 |
| HFC-1243zf | HFC-134 | CF₃l | 11.4 | 23.9 | 64.7 | 14.45 | 99.6 | -25 |
| HFC-1243zf | HFC-134a | HFC-152a | 41.5 | 21.5 | 37.1 | 14.95 | 103 | -25 |
| HFC-1243zf | HFC-134A | n-butane | 7.0 | 81.4 | 11.6 | 17.03 | 117 | -25 |
| HFC-1243zf | HFC-152a | propane | 2.9 | 34.0 | 63.0 | 31.73 | 219 | -25 |
| HFC-1243zf | HFC-152a | n-butane | 28.8 | 60.3 | 11.0 | 15.71 | 108 | -25 |
| HFC-1243zf | HFC-152a | isobutane | 6.2 | 68.5 | 25.3 | 17.05 | 118 | -25 |
| HFC-1243zf | HFC-152a | DME | 33.1 | 36.8 | 30.1 | 11.41 | 78.7 | -25 |
| HFC-1243zf | HFC-227ea | n-butane | 62.0 | 28.4 | 9.6 | 13.67 | 94.3 | -25 |
| HFC-1243zf | HFC-227ea | isobutane | 27.9 | 51.0 | 21.1 | 15.00 | 103 | -25 |
| HFC-1243zf | HFC-227ea | DME | 48.1 | 44.8 | 7.2 | 12.78 | 88.1 | -25 |
| HFC-1243zf | n-butane | DME | 60.3 | 10.1 | 29.6 | 12.28 | 84.7 | -25 |
| HFC-1243zf | isobutane | DME | 47.1 | 26.9 | 25.9 | 13.16 | 90.7 | -25 |
| HFC-1243zf | isobutane | CF₃l | 32.8 | 1.1 | 66.1 | 13.97 | 96.3 | -25 |
| HFC-1243zf | DME | CF₃SCF₃ | 41.1 | 2.3 | 56.6 | 13.60 | 93.8 | -25 |

The near-azeotropic compositions of the present invention at a specified temperature are listed in Table 5.

**TABLE 5**

| **Component A** | **Component B** | **(wt% A/wt% B)** | **T(C)** |
|---|---|---|---|
| HFC-1234yf | HFC-32 | 1-57/99-43 | -25 |
| HFC-1234yf | HFC-125 | 1-51/99-49 | -25 |
| HFC-1234yf | HFC-134 | 1-99/99-1 | -25 |
| HFC-1234yf | HFC-134a | 1-99/99-1 | -25 |
| HFC-1234yf | HFC-152a | 1-99/99-1 | -25 |
| HFC-1234yf | HFC-161 | 1-99/99-1 | -25 |
| HFC-1234yf | HFC-143a | 1-60/99-40 | -25 |
| HFC-1234yf | HFC-227ea | 29-99/71-1 | -25 |
| HFC-1234yf | HFC-236fa | 66-99/34-1 | -25 |
| HFC-1234yf | HFC-1225ye | 1-99/99-1 | -25 |
| HFC-1234yf | trans-HFC-1234ze | 1-99/99-1 | -25 |
| HFC-1234yf | HFC-1243zf | 1-99/99-1 | -25 |
| HFC-1234yf | propane | 1-80/99-20 | -25 |
| HFC-1234yf | n-butane | 71-99/29-1 | -25 |
| HFC-1234yf | isobutane | 60-99/40-1 | -25 |
| HFC-1234yf | DME | 1-99/99-1 | -25 |
| HFC-1225ye | trans-HFC-1234ze | 1-99/99-1 | -25 |
| HFC-1225ye | HFC-1243zf | 1-99/99-1 | -25 |
| HFC-1225ye | HFC-134 | 1-99/99-1 | -25 |
| HFC-1225ye | HFC-134a | 1-99/99-1 | -25 |
| HFC-1225ye | HFC-152a | 1-99/99-1 | -25 |
| HFC-1225ye | HFC-161 | 1-84/99-16, 90-99/10-1 | -25 |
| HFC-1225ye | HFC-227ea | 1-99/99-1 | -25 |
| HFC-1225ye | HFC-236ea | 57-99/43-1 | -25 |
| HFC-1225ye | HFC-236fa | 48-99/52-1 | -25 |
| HFC-1225ye | HFC-245fa | 70-99/30-1 | -25 |
| HFC-1225ye | propane | 1-72/99-28 | -25 |
| HFC-1225ye | n-butane | 65-99/35-1 | -25 |
| HFC-1225ye | isobutane | 50-99/50-1 | -25 |
| HFC-1225ye | DME | 1-99/99-1 | -25 |
| HFC-1225ye | CF₃I | 1-99/99-1 | -25 |
| HFC-1225ye | CF₃SCF₃ | 1-99/99-1 | -25 |
| trans-HFC-1234ze | cis-HFC-1234ze | 73-99/27-1 | -25 |
| trans-HFC-1234ze | HFC-1243zf | 1-99/99-1 | -25 |
| trans-HFC-1234ze | HFC-134 | 1-99/99-1 | -25 |
| trans-HFC-1234ze | HFC-134a | 1-99/99-1 | -25 |
| trans-HFC-1234ze | HFC-152a | 1-99/99-1 | -25 |
| trans-HFC-1234ze | HFC-161 | 1-52/99-48, 87-99/13-1 | -25 |
| trans-HFC-1234ze | HFC-227ea | 1-99/99-1 | -25 |
| trans-HFC-1234ze | HFC-236ea | 54-99/46-1 | -25 |
| trans-HFC-1234ze | HFC-236fa | 44-99/56-1 | -25 |
| trans-HFC-1234ze | HFC-245fa | 67-99/33-1 | -25 |
| trans-HFC-1234ze | propane | 1-71/99-29 | -25 |
| trans-HFC-1234ze | n-butane | 62-99/38-1 | -25 |
| trans-HFC-1234ze | isobutane | 39-99/61-1 | -25 |
| trans-HFC-1234ze | DME | 1-99/99-1 | -25 |
| trans-HFC-1234ze | CF₃SCF₃ | 1-99/99-1 | -25 |
| trans-HFC-1234ze | CF₃I | 1-99/99-1 | -25 |
| HFC-1243zf | HFC-134 | 1-99/99-1 | -25 |
| HFC-1243zf | HFC-134a | 1-99/99-1 | -25 |
| HFC-1243zf | HFC-152a | 1-99/99-1 | -25 |
| HFC-1243zf | HFC-161 | 1-99/99-1 | -25 |
| HFC-1243zf | HFC-227ea | 1-99/99-1 | -25 |
| HFC-1243zf | HFC-236ea | 53-99/47-1 | -25 |
| HFC-1243zf | HFC-236fa | 49-99/51-1 | -25 |
| HFC-1243zf | HFC-245fa | 66-99/34-1 | -25 |
| HFC-1243zf | propane | 1-71/99-29 | -25 |
| HFC-1243zf | n-butane | 62-99/38-1 | -25 |
| HFC-1243zf | isobutane | 45-99/55-1 | -25 |
| HFC-1243zf | DME | 1-99/99-1 | -25 |
| cis- HFC-1234ze | HFC-236ea | 1-99/99-1 | 25 |
| cis- HFC-1234ze | HFC-236fa | 1-99/99-1 | 25 |
| cis- HFC-1234ze | HFC-245fa | 1-99/99-1 | 25 |
| cis- HFC-1234ze | n-butane | 1-80/99-20 | -25 |
| cis- HFC-1234ze | isobutane | 1-69/99-31 | -25 |
| cis- HFC-1234ze | 2-methyl butane | 60-99/40-1 | 25 |
| cis- HFC-1234ze | n-pentane | 63-99/37-1 | 25 |
| HFC-1234ye | HFC-134 | 38-99/62-1 | 25 |
| HFC-1234ye | HFC-236ea | 1-99/99-1 | -25 |
| HFC-1234ye | HFC-236fa | 1-99/99-1 | 25 |
| HFC-1234ye | HFC-245fa | 1-99/99-1 | 25 |
| HFC-1234ye | Cis-HFC-1234ze | 1-99/99-1 | 25 |
| HFC-1234ye | n-butane | 1-78/99-22 | 25 |
| HFC-1234ye | cyclopentane | 70-99/30-1 | 25 |
| HFC-1234ye | isobutane | 1-68/99-32 | 25 |
| HFC-1234ye | 2-methylbutane | 47-99/53-1 | 25 |
| HFC-1234ye | n-pentane | 57-99/43-1 | 25 |

Ternary and higher order near-azeotrope compositions comprising fluoroolefins have also been identified as listed in Table 6.

**TABLE 6**

| Components | Near-azeotrope range (weight percent) | Temp (°C) |
|---|---|---|
| HFC-1225ye/HFC-134a/HFC-152a | 1-98/1-98/1-98 | 25 |
| HFC-1225ye/HFC-134a/HFC-161 | 1-98/1-98/1-98 | 25 |
| HFC-1225ye/HFC-134a/isobutane | 1-98/1-98/1-40 | 25 |
| HFC-1225ye/HFC-134a/DME | 1-98/1-98/1-20 | 25 |
| HFC-1225ye/HFC-152a/isobutane | 1-98/1-98/1-50 | 25 |
| HFC-1225ye/HFC-152a/DME | 1-98/1-98/1-98 | 25 |
| HFC-1225ye/HFC-1234yf/HFC-134a | 1-98/1-98/1-98 | 25 |
| HFC-1225ye/HFC-1234yf/HFC-152a | 1-98/1-98/1-98 | 25 |
| HFC-1225ye/HFC-1234yf/HFC-125 | 1-98/1-98/1-20 | 25 |
| HFC-1225ye/HFC-1234yf/CF3l | 1-98/1-98/1-98 | 25 |
| HFC-1225ye/HFC-134a/HFC-152a/HFC-32 | 1-97/1-97/1-97/1-10 | 25 |
| HFC-125/HFC-1225ye/isobutane | 80-98/1-19/1-10 | 25 |
| HFC-125/trans-HFC-1234ze/isobutane | 80-98/1-19/1-10 | 25 |
| HFC-125/HFC-1234yf/isobutane | 80-98/1-19/1-10 | 25 |
| HFC-32/HFC-125/HFC-1225ye | 1-98/1-98/1-4 | 25 |
| HFC-32/HFC-125/trans-HFC-1234ze | 1-98/1-98/1-50 | 25 |
| HFC-32/HFC-125/HFC-1234yf | 1-98/1-98/1-55 | 25 |
| HFC-125/trans-HFC-1234ze/n-butane | 80-98/1-19/1-10 | 25 |
| HFC-125/HFC-1234yf/n-butane | 80-98/1-19/1-10 | 25 |
| HFC-1234yf/HFC-32/HFC-143a | 1-50/1-98/1-98 | -25 |
| HFC-1234yf/HFC-32/isobutane | 1-40/59-98/1-30 | -25 |
| HFC-1234yf/HFC-125/HFC-143a | 1-60/1-98/1-98 | -25 |
| HFC-1234yf/HFC-125/isobutane | 1-40/59-98/1-20 | -25 |
| HFC-1234yf/HFC-134/propane | 1-80/1-70/19-90 | -25 |
| HFC-1234yf/HFC-134/DME | 1-70/1-98/29-98 | -25 |
| HFC-1234yf/HFC-134a/propane | 1-80/1-80/19-98 | -25 |
| HFC-1234yf/HFC-134a/n-butane | 1-98/1-98/1-30 | -25 |
| HFC-1234yf/HFC-134a/isobutane | 1-98/1-98/1-30 | -25 |
| HFC-1234yf/HFC-134a/DME | 1-98/1-98/1-40 | -25 |
| HFC-1234yf/HFC-143a/propane | 1-80/1-98/1-98 | -25 |
| HFC-1234yf/HFC-143a/DME | 1-40/59-98/1-20 | -25 |
| HFC-1234yf/HFC-152a/n-butane | 1-98/1-98/1-30 | -25 |
| HFC-1234yf/HFC-152a/isobutane | 1-98/1-90/1-40 | -25 |
| HFC-1234yf/HFC-152a/DME | 1-70/1-98/1-98 | -25 |
| HFC-1234yf/HFC-227ea/propane | 1-80/1-70/29-98 | -25 |
| HFC-1234yf/HFC-227ea/n-butane | 40-98/1-59/1-20 | -25 |
| HFC-1234yf/HFC-227ea/isobutane | 30-98/1-69/1-30 | -25 |
| HFC-1234yf/HFC-227ea/DME | 1-98/1-80/1-98 | -25 |
| HFC-1234yf/n-butane/DME | 1-98/1-40/1-98 | -25 |
| HFC-1234yf/isobutane/DME | 1-98/1-50/1-98 | -25 |
| HFC-1234yf/DME/CF₃l | 1-98/1-98/1-98 | -25 |
| HFC-1234yf/DME/CF₃SCF₃ | 1-98/1-40/1-80 | -25 |
| HFC-1225ye/trans-HFC-1234ze/HFC-134 | 1-98/1-98/1-98 | -25 |
| HFC-1225ye/trans-HFC-1234ze/HFC-227ea | 1-98/1-98/1-98 | -25 |
| HFC-1225ye/trans-HFC-1234ze/propane | 1-60/1-60/1-98 | -25 |
| HFC-1225ye/trans-HFC-1234ze/n-butane | 1-98/1-98/1-30 | -25 |
| HFC-1225ye/trans-HFC-1234ze/DME | 1-98/1-98/1-98 | -25 |
| HFC-1225ye/trans-HFC-1234ze/CF₃SCF₃ | 1-98/1-98/1-98 | -25 |
| HFC-1225ye/HFC-1243zf/HFC-134 | 1-98/1-98/1-98 | -25 |
| HFC-1225ye/HFC-1243zf/n-butane | 1-98/1-98/1-30 | -25 |
| HFC-1225ye/HFC-1243zf/isobutane | 1-98/1-98/1-40 | -25 |
| HFC-1225ye/HFC-1243zf/DME | 1-98/1-98/1-98 | -25 |
| HFC-1225ye/HFC-1243zf/CF₃l | 1-98/1-98/1-98 | -25 |
| HFC-1225ye/HFC-134/HFC-152a | 1-98/1-98/1-98 | -25 |
| HFC-1225ye/HFC-134/HFC-227ea | 1-98/1-98/1-98 | -25 |
| HFC-1225ye/HFC-134/n-butane | 1-98/1-90/1-40 | -25 |
| HFC-1225ye/HFC-134/isobutane | 1-98/1-90/1-40 | -25 |
| HFC-1225ye/HFC-134/DME | 1-98/1-98/1-40 | -25 |
| HFC-1225ye/HFC-227ea/DME | 40-98/1-59/1-30 | -25 |
| HFC-1225ye/n-butane/DME | 1-98/1-30/1-98 | -25 |
| HFC-1225ye/n-butane/CF₃SCF₃ | 1-98/1-20/1-98 | -25 |
| HFC-1225ye/isobutane/DME | 1-98/1-60/1-98 | -25 |
| HFC-1225ye/isobutane/CF₃l | -98/1-40/1-98 | -25 |
| trans-HFC-1234ze/HFC-1243zf/HFC-227ea | 1-98/1-98/1-98 | -25 |
| trans-HFC-1234ze/HFC-1243zf/n-butane | 1-98/1-98/1-30 | -25 |
| trans-HFC-1234ze/HFC-1243zf/isobutane | 1-98/1-98/1-40 | -25 |
| trans-HFC-1234ze/HFC-1243zf/DME | 1-98/1-98/1-98 | -25 |
| trans-HFC-1234ze/HFC-134/HFC-152a | 1-98/1-98/1-98 | -25 |
| trans-HFC-1234ze/HFC-134/HFC-227ea | 1-98/1-98/1-98 | -25 |
| trans-HFC-1234ze/HFC-134/DME | 1-98/1-98/1-40 | -25 |
| trans-HFC-1234ze/HFC-134a/HFC-152a | 1-98/1-98/1-98 | -25 |
| trans-HFC-1234ze/HFC-152a/n-butane | 1-98/1-98/1-50 | -25 |
| trans-HFC-1234ze/HFC-152a/DME | 1-98/1-98/1-98 | -25 |
| trans-HFC-1234ze/HFC-227ea/n-butane | 1-98/1-98/1-40 | -25 |
| trans-HFC-1234ze/n-butane/DME | 1-98/1-40/1-98 | -25 |
| trans-HFC-1234ze/n-butane/CF₃l | 1-98/1-30/1-98 | -25 |
| trans-HFC-1234ze/isobutane/DME | 1-98/1-60/1-98 | -25 |
| trans-HFC-1234ze/isobutane/ CF₃l | 1-98/1-40/1-98 | -25 |
| trans-HFC-1234ze/isobutane/ CF₃SCF₃ | 1-98/1-40/1-98 | -25 |
| HFC-1243zf/HFC-134/HFC-227ea | 1-98/1-98/1-98 | -25 |
| HFC-1243zf/HFC-134/n-butane | 1-98/1-98/1-40 | -25 |
| HFC-1243zf/HFC-134/DME | 1-98/1-98/1-98 | -25 |
| HFC-1243zf/HFC-134/CF₃l | 1-98/1-98/1-98 | -25 |
| HFC-1243zf/HFC-134a/HFC-152a | 1-98/1-98/1-98 | -25 |
| HFC-1243zf/HFC-134a/n-butane | 1-98/1-98/1-40 | -25 |
| HFC-1243zf/HFC-152a/propane | 1-70/1-70/29-98 | -25 |
| HFC-1243zf/HFC-152a/n-butane | 1-98/1-98/1-30 | -25 |
| HFC-1243zf/HFC-152a/isobutane | 1-98/1-98/1-40 | -25 |
| HFC-1243zf/HFC-152a/DME | 1-98/1-98/1-98 | -25 |
| HFC-1243zf/HFC-227ea/n-butane | 1-98/1-98/1-40 | -25 |
| HFC-1243zf/HFC-227ea/isobutane | 1-98/1-90/1-50 | -25 |
| HFC-1243zf/HFC-227ea/DME | 1-98/1-80/1-90 | -25 |
| HFC-1243zf/n-butane/DME | 1-98/1-40/1-98 | -25 |
| HFC-1243zf/isobutane/DME | 1-98/1-60/1-98 | -25 |
| HFC-1243zf/isobutane/CF₃l | 1-98/1-40/1-98 | -25 |
| HFC-1243zf/DME/CF₃SCF₃ | 1-98/1-40/1-90 | -25 |

Certain of the compositions of the present invention are non-azeotropic compositions. Those compositions of the present invention falling within the preferred ranges of Table 2, but outside of the near-azeotropic ranges of Table 5 and Table 6 may be considered to be non-azeotropic.

A non-azeotropic composition may have certain advantages over azeotropic or near azeotropic mixtures. A non-azeotropic composition is a mixture of two or more substances that behaves as a mixture rather than a single substance. One way to characterize a non-azeotropic composition is that the vapor produced by partial evaporation or distillation of the liquid has a substantially different composition as the liquid from which it was evaporated or distilled, that is, the admixture distills/refluxes with substantial composition change. Another way to characterize a non-azeotropic composition is that the bubble point vapor pressure and the dew point vapor pressure of the composition at a particular temperature are substantially different. Herein, a composition is non-azeotropic if, after 50 weight percent of the composition is removed, such as by evaporation or boiling off, the difference in vapor pressure between the original composition and the composition remaining after 50 weight percent of the original composition has been removed is greater than about 10 percent.

The compositions of the present invention may be prepared by any convenient method to combine the desired amounts of the individual components. A preferred method is to weigh the desired component amounts and thereafter combine the components in an appropriate vessel. Agitation may be used, if desired.

An alternative means for making compositions of the present invention may be a method for making a refrigerant blend composition, wherein said refrigerant blend composition comprises a composition as disclosed herein, said method comprising (i) reclaiming a volume of one or more components of a refrigerant composition from at least one refrigerant container, (ii) removing impurities sufficiently to enable reuse of said one or more of the reclaimed components, (iii) and optionally, combining all or part of said reclaimed volume of components with at least one additional refrigerant composition or component.

A refrigerant container may be any container in which is stored a refrigerant blend composition that has been used in a refrigeration apparatus, air-conditioning apparatus or heat pump apparatus. Said refrigerant container may be the refrigeration apparatus, air-conditioning apparatus or heat pump apparatus in which the refrigerant blend was used. Additionally, the refrigerant container may be a storage container for collecting reclaimed refrigerant blend components, including but not limited to pressurized gas cylinders.

Residual refrigerant means any amount of refrigerant blend or refrigerant blend component that may be moved out of the refrigerant container by any method known for transferring refrigerant blends or refrigerant blend components.

Impurities may be any component that is in the refrigerant blend or refrigerant blend component due to its use in a refrigeration apparatus, air-conditioning apparatus or heat pump apparatus. Such impurities include but are not limited to refrigeration lubricants, being those described earlier herein, particulates including but not limited to metal, metal salt or elastomer particles, that may have come out of the refrigeration apparatus, air-conditioning apparatus or heat pump apparatus, and any other contaminants that may adversely effect the performance of the refrigerant blend composition.

Such impurities may be removed sufficiently to allow reuse of the refrigerant blend or refrigerant blend component without adversely effecting the performance or equipment within which the refrigerant blend or refrigerant blend component will be used.

It may be necessary to provide additional refrigerant blend or refrigerant blend component to the residual refrigerant blend or refrigerant blend component in order to produce a composition that meets the specifications required for a given product. For instance, if a refrigerant blend has 3 components in a particular weight percentage range, it may be necessary to add one or more of the components in a given amount in order to restore the composition to within the specification limits.

The heat transfer fluid compositions of the present invention will have global warming potential (GWP) that are less than many hydrofluorocarbon refrigerants currently in use. Preferably, such compositions will also have zero or low ozone depletion potential.One aspect of the present invention is to provide a refrigerant with a global warming potential of less than 1000, less than 500, less than 150, less than 100, or less than 50. Another aspect of the present invention is to reduce the net GWP of refrigerant mixtures by adding fluoroolefins to said mixtures.

The compositions of the present invention may be useful as low global warming potential (GWP) replacements for currently used refrigerants, including but not limited to R134a (or HFC-134a, 1,1,1,2-tetrafluoroethane), R22 (or HCFC-22, chlorodifluoromethane), R123 (or HFC-123, 2,2-dichloro-1,1,1-trifluoroethane), R11 (CFC-11, fluorotrichloromethane), R12 (CFC-12, dichlorodifluoromethane), R245fa (or HFC-245fa, 1,1,1,3,3-pentafluoropropane), R114 (or CFC-114, 1,2-dichloro-1,1,2,2-tetrafluoroethane), R236fa (or HFC-236fa, 1,1,1,3,3,3-hexafluoropropane), R124 (or HCFC-124, 2-chloro-1,1,1,2-tetrafluoroethane), R407C (ASHRAE designation for a blend of 52 weight percent R134a, 25 weight percent R125 (pentafluoroethane), and 23 weight percent R32 (difluoromethane), R410A (ASHRAE designation for a blend of 50 weight percent R125 and 50 weight percent R32), R417A, (ASHRAE designation for a blend of 46.6 weight percent R125, 50.0 weight percent R134a, and 3.4 weight percent n-butane), R422A, R422B, R422C and R422D, (ASHRAE designation for a blend of 85.1 weight percent R125, 11.5 weight percent R134a, and 3.4 weight percent isobutane), R404A, (ASHRAE designation for a blend of 44 weight percent R125, 52 weight percent R143a (1,1,1-trifluoroethane), and 4.0 weight percent R134a) and R507A (ASHRAE designation for a blend of 50 weight percent R125 and 50 weight percent R143a). Additionally, the compositions of the present invention may be useful as replacements for R12 (CFC-12, dichlorodifluoromethane) or R502 (ASHRAE designation for a blend of 51.2 weight percent CFC-115 (chloropentafluoroethane) and 48.8 weight percent HCFC-22).

Often replacement refrigerants are most useful if capable of being used in the original refrigeration equipment designed for a different refrigerant. The compositions of the present invention may be useful as replacements for the above-mentioned refrigerants in original equipment. Additionally, the compositions of the present invention may be useful as replacements for the above mentioned refrigerants in equipment designed to use the above-mentioned refrigerants.

The compositions of the present invention may further comprise a lubricant. Lubricants of the present invention comprise refrigeration lubricants, i.e. those lubricants suitable for use with refrigeration, air-conditioning, or heat pump apparatus. Among these lubricants are those conventionally used in compression refrigeration apparatus utilizing chlorofluorocarbon refrigerants. Such lubricants and their properties are discussed in the 1990 ASHRAE Handbook, Refrigeration Systems and Applications, chapter 8, titled "Lubricants in Refrigeration Systems", pages 8.1 through 8.21. Lubricants of the present invention may comprise those commonly known as "mineral oils" in the field of compression refrigeration lubrication. Mineral oils comprise paraffins (i.e. straight-chain and branched-carbon-chain, saturated hydrocarbons), naphthenes (i.e. cyclic paraffins) and aromatics (i.e. unsaturated, cyclic hydrocarbons containing one or more rings characterized by alternating double bonds). Lubricants of the present invention further comprise those commonly known as "synthetic oils" in the field of compression refrigeration lubrication. Synthetic oils comprise alkylaryls (i.e. linear and branched alkyl alkylbenzenes), synthetic paraffins and napthenes, and poly(alphaolefins). Representative conventional lubricants of the present invention are the commercially available BVM 100 N (paraffinic mineral oil sold by BVA Oils), Suniso® 3GS and Suniso® 5GS (naphthenic mineral oil sold by Crompton Co.), Sontex® 372LT (naphthenic mineral oil sold by Pennzoil), Calumet® RO-30 (naphthenic mineral oil sold by Calumet Lubricants), Zerol® 75, Zerol® 150 and Zerol® 500 (linear alkylbenzenes sold by Shrieve Chemicals) and HAB 22 (branched alkylbenzene sold by Nippon Oil).

Lubricants of the present invention further comprise those that have been designed for use with hydrofluorocarbon refrigerants and are miscible with refrigerants of the present invention under compression refrigeration, air-conditioning, or heat pump apparatus' operating conditions. Such lubricants and their properties are discussed in "Synthetic Lubricants and High-Performance Fluids", R. L. Shubkin, editor, Marcel Dekker, 1993. Such lubricants include, but are not limited to, polyol esters (POEs) such as Castrol® 100 (Castrol, United Kingdom), polyalkylene glycols (PAGs) such as RL-488A from Dow (Dow Chemical, Midland, Michigan), and polyvinyl ethers (PVEs). These lubricants are readily available from various commercial sources.

Lubricants of the present invention are selected by considering a given compressor's requirements and the environment to which the lubricant will be exposed. Lubricants of the present invention preferably have a kinematic viscosity of at least about 5 cs (centistokes) at 40°C.

Commonly used refrigeration system additives may optionally be added, as desired, to compositions of the present invention in order to enhance lubricity and system stability. These additives are generally known within the field of refrigeration compressor lubrication, and include anti wear agents, extreme pressure lubricants, corrosion and oxidation inhibitors, metal surface deactivators, free radical scavengers, foaming and antifoam control agents, leak detectants and the like. In general, these additives are present only in small amounts relative to the overall lubricant composition. They are typically used at concentrations of from less than about 0.1 % to as much as about 3 % of each additive. These additives are selected on the basis of the individual system requirements. Some typical examples of such additives may include, but are not limited to, lubrication enhancing additives, such as alkyl or aryl esters of phosphoric acid and of thiophosphates. Additionally, the metal dialkyl dithiophosphates (e.g. zinc dialkyl dithiophosphate or ZDDP, Lubrizol 1375) and other members of this family of chemicals may be used in compositions of the present invention. Other antiwear additives include natural product oils and assymetrical polyhydroxyl lubrication additives such as Synergol TMS (International Lubricants). Similarly, stabilizers such as anti oxidants, free radical scavengers, and water scavengers may be employed. Compounds in this category can include, but are not limited to, butylated hydroxy toluene (BHT) and epoxides.

The compositions of the present invention may further comprise about 0.01 weight percent to about 5 weight percent of an additive such as, for example, a stabilizer, free radical scavenger and/or antioxidant. Such additives include but are not limited to, nitromethane, hindered phenols, hydroxylamines, thiols, phosphites, or lactones. Single additives or combinations may be used.

The compositions of the present invention may further comprise about 0.01 weight percent to about 5 weight percent of a water scavenger (drying compound). Such water scavengers may comprise ortho esters such as trimethyl-, triethyl-, or tripropylortho formate.

The compositions of the present invention may further comprise a tracer selected from the group consisting of hydrofluorocarbons (HFCs), deuterated hydrocarbons, deuterated hydrofluorocarbons, perfluorocarbons, fluoroethers, brominated compounds, iodated compounds, alcohols, aldehydes, ketones, nitrous oxide (N₂O) and combinations thereof. The tracer compounds are added to the compositions in previously determined quantities to allow detection of any dilution, contamination or other alteration of the composition, as described in U. S. Patent application serial no. 11/062044, filed February 18, 2005.

Typical tracer compounds for use in the present compositions are listed in Table 7.

**TABLE 7**

| **Compound** | **Structure** |
|---|---|
| **Deuterated hydrocarbons and hydrofluorocarbons** | |
| Ethane-d6 | CD₃CD₃ |
| Propane-d8 | CD₃CD₂CD₃ |
| HFC-32-d2 | CD₂F₂ |
| HFC-134a-d2 | CD₂FCF₃ |
| HFC-143a-d3 | CD₃CF₃ |
| HFC-125-d | CDF₂CF₃ |
| HFC-227ea-d | CF₃CDFCF₃ |
| HFC-227ca-d | CF₃CF₂CDF₂ |
| HFC-134-d2 | CDF₂CDF₂ |
| HFC-236fa-d2 | CF₃CD₂CF₃ |
| HFC-245cb-d3 | CF₃CF₂CD₃ |
| HFC-263fb-d2* | CF₃CD₂CH₃ |
| HFC-263fb-d3 | CF₂CH₂CD₃ |

| **Fluoroethers** | |
|---|---|
| HFOC-125E | CHF₂OCF₃ |
| HFOC-134aE | CH₂FOCF₃ |
| HFOC-143aE | CH₃OCF₃ |
| HFOC-227eaE | CF₃OCHFCF₃ |
| HFOC-236faE | CF₃OCH₂CF₃ |
| HFOC-245faEβγ or HFOC-245faEαβ | CHF₂OCH₂CF₃ (or CHF₂CH₂OCF₃) |
| HFOC-245cbEβγ or HFOC-245cbαβ | CH₃OCF₂CF₃ (or CH₃CF₂OCF₃) |
| HFE-42-11mcc (or Freon® E1) | CF₃CF₂CF₂OCHFCF₃ |
| Freon® E2 | CF₃CF₂CF₂0CF(CF₃) CF₂OCHFCF₃ |

| **Hydrofluorocarbons** | |
|---|---|
| HFC-23 | CHF₃ |
| HFC-161 | CH₃CH₂F |
| HFC-152a | CH₃CHF₂ |
| HFC-134 | CHF₂CHF₂ |
| HFC-227ea | CF₃CHFCF₃ |
| HFC-227ca | CHF₂CF₂CF₃ |
| HFC-236cb | CH₂FCF₂CF₃ |
| HFC-236ea | CF₃CHFCHF₂ |
| HFC-236fa | CF₃CH₂CF₃ |
| HFC-245cb | CF₃CF₂CH₃ |
| HFC-245fa | CHF₂CH₂CF₃ |
| HFC-254cb | CHF₂CF₂CH₃ |
| HFC-254eb | CF₃CHFCH₃ |
| HFC-263fb | CF₃CH₂CH₃ |
| HFC-272ca | CH₃CF₂CH₃ |
| HFC-281ea | CH₃CHFCH₃ |
| HFC-281fa | CH₂FCH₂CH₃ |
| HFC-329p | CHF₂CF₂CF₂CF₃ |
| HFC-329mmz | (CH₃)₂CHCF₃ |
| HFC-338mf | CF₃CH₂CF₂CF₃ |
| HFC-338pcc | CHF₂CF₂CF₂CHF₂ |
| HFC-347s | CH₃CF₂CF₂CF₃ |
| HFC-43-10mee | CF₃CHFCHFCF₂CF₃ |

| **Perfluorocarbons** | |
|---|---|
| PFC-116 | CF₃CF₃ |
| PFC-C216 | Cyclo(-CF₂CF₂CF₂-) |
| PFC-218 | CF₃CF₂CF₃ |
| PFC-C318 | Cyclo(-CF₂CF₂CF₂CF₂-) |
| PFC-31-10mc | CF₃CF₂CF₂CF₃ |
| PFC-31-10my | (CF₃)₂CFCF₃ |
| PFC-C51-12mycm | Cyclo(-CF(CF₃)CF₂CF(CF₃)CF₂-) |
| PFC-C51-12mym, | trans-cyclo(-CF₂CF(CF₃)CF(CF₃)CF₂-) |
| PFC-C51-12mym, | cis-cyclo(-CF₂CF(CF₃)CF(CF₃)CF₂-) |
| Perfluoromethylcyclo-pentane | Cyclo(-CF₂CF₂(CF₃)CF₂cF₂cF₂-) |
| Perfluoromethylcyclo-hexane | Cyclo(-CF₂CF₂(CF₃)CF₂CF₂CF₂CF₂-) |
| Perfluorodimethylcyclo-hexane (ortho, meta, or para) | Cyclo(-CF₂CF₂(CF₃)CF₂CF₂(CF₃)CF₂-) |
| Perfluoroethylcyclohexane | Cyclo(-CF₂CF₂(CF₂CF₃)CF₂CF₂CF₂CF₂-) |
| Perfluoroindan | C₉F₁₀ (see structure below) |
| | 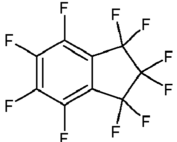 |
| Perfluorotrimethylcyclo-hexane (all possible isomers) | Cyclo(-CF₂(CF₃)CF₂(CF₃)CF₂CF₂(CF₃)CF₂-) |
| Perfluoroisopropylcyclo-hexane | Cyclo(-CF₂CF₂(CF₂(CF₃)₂)CF₂CF₂CF₂CF₂-) |
| Perfluorodecalin (cis or trans, trans shown) | C₁₀F₁₈ (see structure below) |
| | 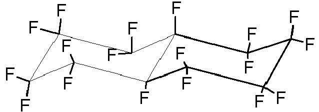 |
| Perfluoromethyldecalin (cis or trans and all additional possible isomers) | C₁₁F₂₀ (see structure below) |
| | 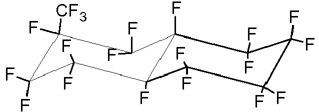 |

| **Brominated compounds** | |
|---|---|
| Bromomethane | CH₃Br |
| Bromofluoromethane | CH₂FBr |
| Bromodifluoromethane | CHF₂Br |
| Dibromofluoromethane | CHFBr₂ |
| Tribromomethane | CHBr₃ |
| Bromoethane | CH₃CH₂Br |
| Bromoethene | CH₂=CHBr |
| 1,2-dibromoethane | CH₂BrCH₂Br |
| 1-bromo-1,2-difluoroethene | CFBr=CHF |

| **Iodated compounds** | |
|---|---|
| Iodotrifluoromethane | CF₃l |
| Difluoroiodomethane | CHF₂l |
| Fluoroiodomethane | CH₂Fl |
| 1,1,2-trifluoro-1-iodoethane | CF₂ICH₂F |
| 1,1,2,2-tetrafluoro-1-iodoethane | CF₂ICHF₂ |
| 1,1,2,2-tetrafluoro-1,2-diiodoethane | CF₂ICF₂l |
| Iodopentafluorobenzene | C₆F₅l |

| **lcohols** | |
|---|---|
| Ethanol | CH₃CH₂OH |
| n-propanol | CH₃CH₂CH₂OH |
| Isopropanol | CH₃CH(OH)CH₃ |

| **Aldehydes and Ketones** | |
|---|---|
| Acetone (2-propanone) | CH₃C(O)CH₃ |
| n-propanal | CH₃CH₂CHO |
| n-butanal | CH₃CH₂CH₂CHO |
| Methyl ethyl ketone (2-butanone) | CH₃C(O)CH₂CH₃ |

| **Other** | |
|---|---|
| Nitrous oxide | N₂O |

The compounds listed in Table 7 are available commercially (from chemical supply houses) or may be prepared by processes known in the art.

Single tracer compounds may be used in combination with the heat transfer fluid compositions of the present invention or multiple tracer compounds may be combined in any proportion to serve as a tracer blend. The tracer blend may contain multiple tracer compounds from the same class of compounds or multiple tracer compounds from different classes of compounds. For example, a tracer blend may contain 2 or more deuterated hydrofluorocarbons, or one deuterated hydrofluorocarbon in combination with one or more perfluorocarbons.

Additionally, some of the compounds in Table 7 exist as multiple isomers, structural or optical. Single isomers or multiple isomers of the same compound may be used in any proportion to prepare the tracer compound. Further, single or multiple isomers of a given compound may be combined in any proportion with any number of other compounds to serve as a tracer blend.

The tracer compound or tracer blend may be present in the compositions at a total concentration of about 50 parts per million by weight (ppm) to about 1000 ppm. Preferably, the tracer compound or tracer blend is present at a total concentration of about 50 ppm to about 500 ppm and most preferably, the tracer compound or tracer blend is present at a total concentration of about 100 ppm to about 300 ppm.

The compositions of the present invention may further comprise a compatibilizer selected from the group consisting of polyoxyalkylene glycol ethers, amides, nitriles, ketones, chlorocarbons, esters, lactones, aryl ethers, fluoroethers and 1,1,1-trifluoroalkanes. The compatibilizer is used to improve solubility of hydrofluorocarbon refrigerants in conventional refrigeration lubricants. Refrigeration lubricants are needed to lubricate the compressor of a refrigeration, air-conditioning or heat pump apparatus. The lubricant must move throughout the apparatus with the refrigerant in particular it must return from the non-compressor zones to the compressor to continue to function as lubricant and avoid compressor failure.

Hydrofluorocarbon refrigerants are generally not compatible with convention refrigeration lubricants such as mineral oils, alkylbenzenes, synthetic paraffins, synthetic napthenes and poly(alpha)olefins. Many replacement lubricants have been proposed, however, the polyalkylene glycols, polyol esters and polyvinyl ethers, suggested for use with hydrofluorocarbon refrigerants are expensive and absorb water readily. Water in a refrigeration, air-conditioning system or heat pump can lead to corrosion and the formation of particles that may plug the capillary tubes and other small orifices in the system, ultimately causing system failure. Additionally, in existing equipment, time-consuming and costly flushing procedures are required to change to a new lubricant. Therefore, it is desirable to continue to use the original lubricant if possible.

The compatibilizers of the present invention improve solubility of the hydrofluorocarbon refrigerants in conventional refrigeration lubricants and thus improve oil return to the compressor.

Polyoxyalkylene glycol ether compatibilizers of the present invention are represented by the formula R¹[(OR²)ₓOR³]_{y}, wherein: x is an integer from 1-3; y is an integer from 1-4; R¹ is selected from hydrogen and aliphatic hydrocarbon radicals having 1 to 6 carbon atoms and y bonding sites; R² is selected from aliphatic hydrocarbylene radicals having from 2 to 4 carbon atoms; R³ is selected from hydrogen and aliphatic and alicyclic hydrocarbon radicals having from 1 to 6 carbon atoms; at least one of R¹ and R³ is said hydrocarbon radical; and wherein said polyoxyalkylene glycol ethers have a molecular weight of from about 100 to about 300 atomic mass units. As used herein, bonding sites mean radical sites available to form covalent bonds with other radicals. Hydrocarbylene radicals mean divalent hydrocarbon radicals. In the present invention, preferred polyoxyalkylene glycol ether compatibilizers are represented by R¹[(OR²)ₓOR³]_{y}: x is preferably 1-2; y is preferably 1; R¹ and R³ are preferably independently selected from hydrogen and aliphatic hydrocarbon radicals having 1 to 4 carbon atoms; R² is preferably selected from aliphatic hydrocarbylene radicals having from 2 or 3 carbon atoms, most preferably 3 carbon atoms; the polyoxyalkylene glycol ether molecular weight is preferably from about 100 to about 250 atomic mass units, most preferably from about 125 to about 250 atomic mass units. The R¹ and R³ hydrocarbon radicals having 1 to 6 carbon atoms may be linear, branched or cyclic. Representative R¹ and R³ hydrocarbon radicals include methyl, ethyl, propyl, isopropyl, butyl, isobutyl, *sec*-butyl, *tert*-butyl, pentyl, isopentyl, neopentyl, *tert*-pentyl, cyclopentyl, and cyclohexyl. Where free hydroxyl radicals on the present polyoxyalkylene glycol ether compatibilizers may be incompatible with certain compression refrigeration apparatus materials of construction (e.g. Mylar®), R¹ and R³ are preferably aliphatic hydrocarbon radicals having 1 to 4 carbon atoms, most preferably 1 carbon atom. The R² aliphatic hydrocarbylene radicals having from 2 to 4 carbon atoms form repeating oxyalkylene radicals - (OR²)ₓ - that include oxyethylene radicals, oxypropylene radicals, and oxybutylene radicals. The oxyalkylene radical comprising R² in one polyoxyalkylene glycol ether compatibilizer molecule may be the same, or one molecule may contain different R² oxyalkylene groups. The present polyoxyalkylene glycol ether compatibilizers preferably comprise at least one oxypropylene radical. Where R¹ is an aliphatic or alicyclic hydrocarbon radical having 1 to 6 carbon atoms and y bonding sites, the radical may be linear, branched or cyclic. Representative R¹ aliphatic hydrocarbon radicals having two bonding sites include, for example, an ethylene radical, a propylene radical, a butylene radical, a pentylene radical, a hexylene radical, a cyclopentylene radical and a cyclohexylene radical. Representative R¹ aliphatic hydrocarbon radicals having three or four bonding sites include residues derived from polyalcohols, such as trimethylolpropane, glycerin, pentaerythritol, 1,2,3-trihydroxycyclohexane and 1,3,5-trihydroxycyclohexane, by removing their hydroxyl radicals.

Representative polyoxyalkylene glycol ether compatibilizers include but are not limited to: CH₃OCH₂CH(CH₃)O(H or CH₃) (propylene glycol methyl (or dimethyl) ether), CH₃O[CH₂CH(CH₃)O]₂(H or CH₃) (dipropylene glycol methyl (or dimethyl) ether), CH₃O[CH₂CH(CH₃)O]₃(H or CH₃) (tripropylene glycol methyl (or dimethyl) ether), C₂H₅OCH₂CH(CH₃)O(H or C₂H₅) (propylene glycol ethyl (or diethyl) ether), C₂H₅O[CH₂CH(CH₃)O]₂(H or C₂H₅) (dipropylene glycol ethyl (or diethyl) ether), C₂H₅O[CH₂CH(CH₃)O]₃(H or C₂H₅) (tripropylene glycol ethyl (or diethyl) ether), C₃H₇OCH₂CH(CH₃)O(H or C₃H₇) (propylene glycol n-propyl (or din-propyl) ether), C₃H₇O[CH₂CH(CH₃)O]₂(H or C₃H₇) (dipropylene glycol n-propyl (or di-n-propyl) ether), C₃H₇O[CH₂CH(CH₃)O]₃(H or C₃H₇) (tripropylene glycol n-propyl (or di-n-propyl) ether), C₄H₉OCH₂CH(CH₃)OH (propylene glycol n-butyl ether), C₄H₉O[CH₂CH(CH₃)O]₂(H or C₄H₉) (dipropylene glycol n-butyl (or di-n-butyl) ether), C₄H₉O[CH₂CH(CH₃)O]₃(H or C₄H₉) (tripropylene glycol n-butyl (or di-n-butyl) ether), (CH₃)₃COCH₂CH(CH₃)OH (propylene glycol t-butyl ether), (CH₃)₃CO[CH₂CH(CH₃)O]₂(H or (CH₃)₃) (dipropylene glycol t-butyl (or di-t-butyl) ether), (CH₃)₃CO[CH₂CH(CH₃)O]₃(H or (CH₃)₃) (tripropylene glycol t-butyl (or di-t-butyl) ether), C₅H₁₁OCH₂CH(CH₃)OH (propylene glycol n-pentyl ether), C₄H₉OCH₂CH(C₂H₅)OH (butylene glycol n-butyl ether), C₄H₉O[CH₂CH(C₂H₅)O]₂H (dibutylene glycol n-butyl ether), trimethylolpropane tri-n-butyl ether (C₂H₅C(CH₂O(CH₂)₃CH₃)₃) and trimethylolpropane di-n-butyl ether (C₂H₅C(CH₂OC(CH₂)₃CH₃)₂CH₂OH).

Amide compatibilizers of the present invention comprise those represented by the formulae R¹C(O)NR²R³ and cyclo-[R⁴C(O)N(R⁵)], wherein R¹, R², R³ and R⁵ are independently selected from aliphatic and alicyclic hydrocarbon radicals having from 1 to 12 carbon atoms; R⁴ is selected from aliphatic hydrocarbylene radicals having from 3 to 12 carbon atoms; and wherein said amides have a molecular weight of from about 100 to about 300 atomic mass units. The molecular weight of said amides is preferably from about 160 to about 250 atomic mass units. R¹, R², R³ and R⁵ may optionally include substituted hydrocarbon radicals, that is, radicals containing non-hydrocarbon substituents selected from halogens (e.g., fluorine, chlorine) and alkoxides (e.g. methoxy). R¹, R², R³ and R⁵ may optionally include heteroatom-substituted hydrocarbon radicals, that is, radicals, which contain the atoms nitrogen (aza-), oxygen (oxa-) or sulfur (thia-) in a radical chain otherwise composed of carbon atoms. In general, no more than three non-hydrocarbon substituents and heteroatoms, and preferably no more than one, will be present for each 10 carbon atoms in R¹⁻³, and the presence of any such non-hydrocarbon substituents and heteroatoms must be considered in applying the aforementioned molecular weight limitations. Preferred amide compatibilizers consist of carbon, hydrogen, nitrogen and oxygen. Representative R¹, R², R³ and R⁵ aliphatic and alicyclic hydrocarbon radicals include methyl, ethyl, propyl, isopropyl, butyl, isobutyl, *sec*-butyl, *tert*-butyl, pentyl, isopentyl, neopentyl, *tert*-pentyl, cyclopentyl, cyclohexyl, heptyl, octyl, nonyl, decyl, undecyl, dodecyl and their configurational isomers. A preferred embodiment of amide compatibilizers are those wherein R⁴ in the aforementioned formula cyclo-[R⁴C(O)N(R⁵)-] may be represented by the hydrocarbylene radical (CR⁶R⁷)ₙ, in other words, the formula: cyclo-[(CR⁶R⁷)nC(O)N(R⁵)-] wherein: the previously-stated values for molecular weight apply; n is an integer from 3 to 5; R⁵ is a saturated hydrocarbon radical containing 1 to 12 carbon atoms; R⁶ and R⁷ are independently selected (for each n) by the rules previously offered defining R¹⁻³. In the lactams represented by the formula: cyclo-[(CR⁶R⁷)ₙC(O)N(R⁵)-], all R⁶ and R⁷ are preferably hydrogen, or contain a single saturated hydrocarbon radical among the n methylene units, and R⁵ is a saturated hydrocarbon radical containing 3 to 12 carbon atoms. For example, 1-(saturated hydrocarbon radical)-5-methylpyrrolidin-2-ones.

Representative amide compatibilizers include but are not limited to: 1-octylpyrrolidin-2-one, 1-decylpyrrolidin-2-one, 1-octyl-5-methylpyrrolidin-2-one, 1-butylcaprolactam, 1-cyclohexylpyrrolidin-2-one, 1-butyl-5-methylpiperid-2-one, 1-pentyl-5-methylpiperid-2-one, 1-hexylcaprolactam, 1-hexyl-5-methylpyrrolidin-2-one, 5-methyl-1-pentylpiperid-2-one, 1,3-dimethylpiperid-2-one, 1-methylcaprolactam, 1-butyl-pyrrolidin-2-one, 1,5-dimethylpiperid-2-one, 1-decyl-5-methylpyrrolidin-2-one, 1-dodecylpyrrolid-2-one, N,N-dibutylformamide and N,N-diisopropylacetamide.

Ketone compatibilizers of the present invention comprise ketones represented by the formula R¹C(O)R², wherein R¹ and R² are independently selected from aliphatic, alicyclic and aryl hydrocarbon radicals having from 1 to 12 carbon atoms, and wherein said ketones have a molecular weight of from about 70 to about 300 atomic mass units. R¹ and R² in said ketones are preferably independently selected from aliphatic and alicyclic hydrocarbon radicals having 1 to 9 carbon atoms. The molecular weight of said ketones is preferably from about 100 to 200 atomic mass units. R¹ and R² may together form a hydrocarbylene radical connected and forming a five, six, or seven-membered ring cyclic ketone, for example, cyclopentanone, cyclohexanone, and cycloheptanone. R¹ and R² may optionally include substituted hydrocarbon radicals, that is, radicals containing non-hydrocarbon substituents selected from halogens (e.g., fluorine, chlorine) and alkoxides (e.g. methoxy). R¹ and R² may optionally include heteroatom-substituted hydrocarbon radicals, that is, radicals, which contain the atoms nitrogen (aza-), oxygen (keto-, oxa-) or sulfur (thia-) in a radical chain otherwise composed of carbon atoms. In general, no more than three non-hydrocarbon substituents and heteroatoms, and preferably no more than one, will be present for each 10 carbon atoms in R¹ and R², and the presence of any such non-hydrocarbon substituents and heteroatoms must be considered in applying the aforementioned molecular weight limitations. Representative R¹ and R² aliphatic, alicyclic and aryl hydrocarbon radicals in the general formula R¹C(O)R² include methyl, ethyl, propyl, isopropyl, butyl, isobutyl, *sec*-butyl, *tert*-butyl, pentyl, isopentyl, neopentyl, *tert*-pentyl, cyclopentyl, cyclohexyl, heptyl, octyl, nonyl, decyl, undecyl, dodecyl and their configurational isomers, as well as phenyl, benzyl, cumenyl, mesityl, tolyl, xylyl and phenethyl.

Representative ketone compatibilizers include but are not limited to: 2-butanone, 2-pentanone, acetophenone, butyrophenone, hexanophenone, cyclohexanone, cycloheptanone, 2-heptanone, 3-heptanone, 5-methyl-2-hexanone, 2-octanone, 3-octanone, diisobutyl ketone, 4-ethylcyclohexanone, 2-nonanone, 5-nonanone, 2-decanone, 4-decanone, 2-decalone, 2-tridecanone, dihexyl ketone and dicyclohexyl ketone.

Nitrile compatibilizers of the present invention comprise nitriles represented by the formula R¹CN, wherein R¹ is selected from aliphatic, alicyclic or aryl hydrocarbon radicals having from 5 to 12 carbon atoms, and wherein said nitriles have a molecular weight of from about 90 to about 200 atomic mass units. R¹ in said nitrile compatibilizers is preferably selected from aliphatic and alicyclic hydrocarbon radicals having 8 to 10 carbon atoms. The molecular weight of said nitrile compatibilizers is preferably from about 120 to about 140 atomic mass units. R¹ may optionally include substituted hydrocarbon radicals, that is, radicals containing non-hydrocarbon substituents selected from halogens (e.g., fluorine, chlorine) and alkoxides (e.g. methoxy). R¹ may optionally include heteroatom-substituted hydrocarbon radicals, that is, radicals, which contain the atoms nitrogen (aza-), oxygen (keto-, oxa-) or sulfur (thia-) in a radical chain otherwise composed of carbon atoms. In general, no more than three non-hydrocarbon substituents and heteroatoms, and preferably no more than one, will be present for each 10 carbon atoms in R¹, and the presence of any such non-hydrocarbon substituents and heteroatoms must be considered in applying the aforementioned molecular weight limitations. Representative R¹ aliphatic, alicyclic and aryl hydrocarbon radicals in the general formula R¹CN include pentyl, isopentyl, neopentyl, *tert*-pentyl, cyclopentyl, cyclohexyl, heptyl, octyl, nonyl, decyl, undecyl, dodecyl and their configurational isomers, as well as phenyl, benzyl, cumenyl, mesityl, tolyl, xylyl and phenethyl.

Representative nitrile compatibilizers include but are not limited to: 1-cyanopentane, 2,2-dimethyl-4-cyanopentane, 1-cyanohexane, 1-cyanoheptane, 1-cyanooctane, 2-cyanooctane, 1-cyanononane, 1-cyanodecane, 2-cyanodecane, 1-cyanoundecane and 1-cyanododecane.

Chlorocarbon compatibilizers of the present invention comprise chlorocarbons represented by the formula RClₓ, wherein; x is selected from the integers 1 or 2; R is selected from aliphatic and alicyclic hydrocarbon radicals having 1 to 12 carbon atoms; and wherein said chlorocarbons have a molecular weight of from about 100 to about 200 atomic mass units. The molecular weight of said chlorocarbon compatibilizers is preferably from about 120 to 150 atomic mass units. Representative R aliphatic and alicyclic hydrocarbon radicals in the general formula RClₓ include methyl, ethyl, propyl, isopropyl, butyl, isobutyl, *sec*-butyl, *tert*-butyl, pentyl, isopentyl, neopentyl, *tert*-pentyl, cyclopentyl, cyclohexyl, heptyl, octyl, nonyl, decyl, undecyl, dodecyl and their configurational isomers.

Representative chlorocarbon compatibilizers include but are not limited to: 3-(chloromethyl)pentane, 3-chloro-3-methylpentane, 1-chlorohexane, 1,6-dichlorohexane, 1-chloroheptane, 1-chlorooctane, 1-chlorononane, 1-chlorodecane, and 1,1,1-trichlorodecane.

Ester compatibilizers of the present invention comprise esters represented by the general formula R¹CO₂R², wherein R¹ and R² are independently selected from linear and cyclic, saturated and unsaturated, alkyl and aryl radicals. Preferred esters consist essentially of the elements C, H and O, have a molecular weight of from about 80 to about 550 atomic mass units.

Representative esters include but are not limited to: (CH₃)₂CHCH₂OOC(CH₂)₂₋₄OCOCH₂CH(CH₃)₂ (diisobutyl dibasic ester), ethyl hexanoate, ethyl heptanoate, n-butyl propionate, n-propyl propionate, ethyl benzoate, di-n-propyl phthalate, benzoic acid ethoxyethyl ester, dipropyl carbonate, "Exxate 700" (a commercial C₇ alkyl acetate), "Exxate 800" (a commercial C₈ alkyl acetate), dibutyl phthalate, and tert-butyl acetate.

Lactone compatibilizers of the present invention comprise lactones represented by structures [A], [B], and [C]:

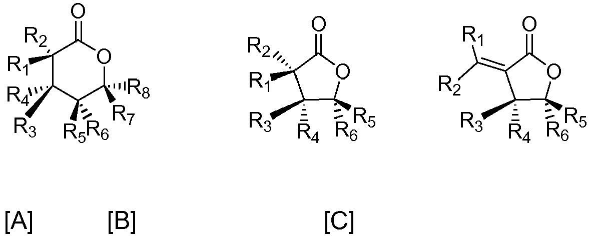

These lactones contain the functional group -CO₂- in a ring of six (A), or preferably five atoms (B), wherein for structures [A] and [B], R₁ through R₈ are independently selected from hydrogen or linear, branched, cyclic, bicyclic, saturated and unsaturated hydrocarbyl radicals. Each R₁ though R₈ may be connected forming a ring with another R₁ through R₈. The lactone may have an exocyclic alkylidene group as in structure [C], wherein R₁ through R₆ are independently selected from hydrogen or linear, branched, cyclic, bicyclic, saturated and unsaturated hydrocarbyl radicals. Each R₁ though R₆ may be connected forming a ring with another R₁ through R₆. The lactone compatibilizers have a molecular weight range of from about 100 to about 300 atomic mass units, preferred from about 100 to about 200 atomic mass units.

Representative lactone compatibilizers include but are not limited to the compounds listed in Table 8.

**TABLE 8**

| **Additive** | **Molecular Structure** | **Molecular Formula** | **Molecular Weight (amu)** |
|---|---|---|---|
| (E,Z)-3-ethylidene-5-methyl-dihydro-furan-2-one | 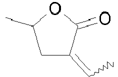 | C₇H₁₀O₂ | 126 |
| (E,Z)-3-propylidene-5-methyl-dihydro-furan-2-one | 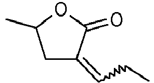 | C₈H₁₂O₂ | 140 |
| (E,Z)-3-butylidene-5-methyl-dihydro-furan-2-one | 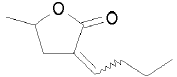 | C₉H₁₄O₂ | 154 |
| (E,Z)-3-pentylidene-5-methyl-dihydro-furan-2-one | 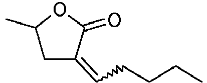 | C₁₀H₁₆O₂ | 168 |
| (E,Z)-3-Hexylidene-5-methyl-dihydro-furan-2-one | 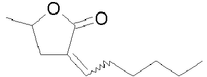 | C₁₁H₁₈O₂ | 182 |
| (E,Z)-3-Heptylidene-5-methyl-dihydro-furan-2-one | 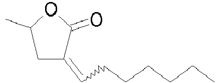 | C₁₂H₂₀O₂ | 196 |
| (E,Z)-3-octylidene-5-methyl-dihydro-furan-2-one | 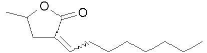 | C₁₃H₂₂O₂ | 210 |
| (E,Z)-3-nonylidene-5-methyl-dihydro-furan-2-one | 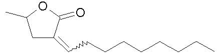 | C₁₄H₂₄O₂ | 224 |
| (E,Z)-3-decylidene-5-methyl-dihydro-furan-2-one | 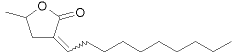 | C₁₅H₂₆O₂ | 238 |
| (E,Z)-3-(3,5,5-trimethylhexylidene)-5-methyl-dihydrofuran-2-one | 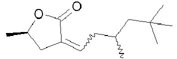 | C₁₄H₂₄O₂ | 224 |
| (E,Z)-3-cyclohexylmethylidene-5-methyl-dihydrofuran-2-one | 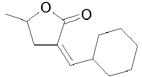 | C₁₂H₁₈O₂ | 194 |
| *gamma*-octalactone | 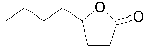 | C₈H₁₄O₂ | 142 |
| *gamma*-nonalactone | 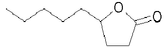 | C₉H₁₆O₂ | 156 |
| *gamma*-decalactone | 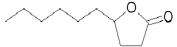 | C₁₀H₁₈O₂ | 170 |
| *gamma*-undecalactone | 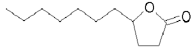 | C₁₁H₂₀O₂ | 184 |
| *gamma*-dodecalactone | 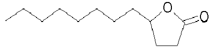 | C₁₂H₂₂O₂ | 198 |
| 3-hexyldihydro-furan-2-one | 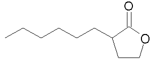 | C₁₀H₁₈O₂ | 170 |
| 3-heptyldihydro-furan-2-one | 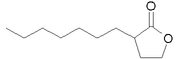 | C₁₁H₂₀O₂ | 184 |
| *cis*-3-ethyl-5-methyl-dihydro-furan-2-one | 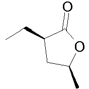 | C₇H₁₂O₂ | 128 |
| *cis*-(3-propyl-5-methyl)-dihydro-furan-2-one | 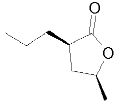 | C₈H₁₄O₂ | 142 |
| *cis*-(3-butyl-5-methyl)-dihydro-furan-2-one | 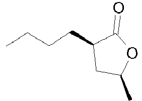 | C₉H₁₆O₂ | 156 |
| *cis*-(3-pentyl-5-methyl)-dihydro-furan-2-one | 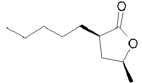 | C₁₀H₁₈O₂ | 170 |
| *cis*-3-hexyl-5-methyl-dihydro-furan-2-one | 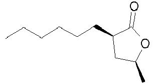 | C₁₁H₂₀O₂ | 184 |
| *cis*-3-heptyl-5-methyl-dihydro-furan-2-one | 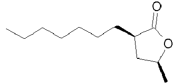 | C₁₂H₂₂O₂ | 198 |
| *cis*-3-octyl-5-methyl-dihydro-furan-2-one | 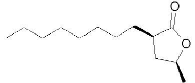 | C₁₃H₂₄O₂ | 212 |
| *cis*-3-(3,5,5-trimethylhexyl)-5-methyl-dihydro-furan-2-one | 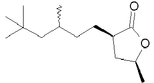 | C₁₄H₂₆O₂ | 226 |
| *cis*-3-cyclohexylmethyl-5-methyl-dihydro-furan-2-one | 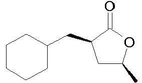 | C₁₂H₂₀O₂ | 196 |
| 5-methyl-5-hexyl-dihydro-furan-2-one | 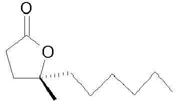 | C₁₁H₂₀O₂ | 184 |
| 5-methyl-5-octyl-dihydro-furan-2-one | 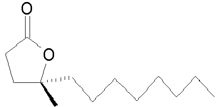 | C₁₃H₂₄O₂ | 212 |
| Hexahydro-isobenzofuran-1-one | 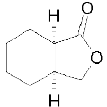 | C₈H₁₂O₂ | 140 |
| *delta*-decalactone | 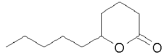 | C₁₀H₁₈O₂ | 170 |
| *delta*-undecalactone | 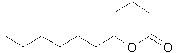 | C₁₁H₂₀O₂ | 184 |
| *delta*-dodecalactone | 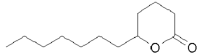 | C₁₂H₂₂O₂ | 198 |
| mixture of 4-hexyl-dihydrofuran-2-one and 3-hexyl-dihydro-furan-2-one | 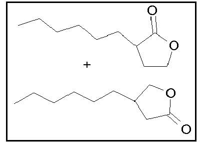 | C₁₀H₁₈O₂ | 170 |

Lactone compatibilizers generally have a kinematic viscosity of less than about 7 centistokes at 40°C. For instance, gamma-undecalactone has kinematic viscosity of 5.4 centistokes and cis-(3-hexyl-5-methyl)dihydrofuran-2-one has viscosity of 4.5 centistokes both at 40°C. Lactone compatibilizers may be available commercially or prepared by methods as described in U. S. patent application 10/910,495 filed August 3, 2004, incorporated herein by reference.

Aryl ether compatibilizers of the present invention further comprise aryl ethers represented by the formula R¹OR², wherein: R¹ is selected from aryl hydrocarbon radicals having from 6 to 12 carbon atoms; R² is selected from aliphatic hydrocarbon radicals having from 1 to 4 carbon atoms; and wherein said aryl ethers have a molecular weight of from about 100 to about 150 atomic mass units. Representative R¹ aryl radicals in the general formula R¹OR² include phenyl, biphenyl, cumenyl, mesityl, tolyl, xylyl, naphthyl and pyridyl. Representative R² aliphatic hydrocarbon radicals in the general formula R¹OR² include methyl, ethyl, propyl, isopropyl, butyl, isobutyl, *sec*-butyl and *tert*-butyl. Representative aromatic ether compatibilizers include but are not limited to: methyl phenyl ether (anisole), 1,3-dimethyoxybenzene, ethyl phenyl ether and butyl phenyl ether.

Fluoroether compatibilizers of the present invention comprise those represented by the general formula R¹OCF₂CF₂H, wherein R¹ is selected from aliphatic, alicyclic, and aromatic hydrocarbon radicals having from about 5 to about 15 carbon atoms, preferably primary, linear, saturated, alkyl radicals. Representative fluoroether compatibilizers include but are not limited to: C₈H₁₇OCF₂CF₂H and C₆H₁₃OCF₂CF₂H. It should be noted that if the refrigerant is a fluoroether, then the compatibilizer may not be the same fluoroether.

Fluoroether compatibilizers may further comprise ethers derived from fluoroolefins and polyols. The fluoroolefins may be of the type CF₂=CXY, wherein X is hydrogen, chlorine or fluorine, and Y is chlorine, fluorine, CF₃ or OR_{f}, wherein R_{f} is CF₃, C₂F₅, or C₃F₇. Representative fluoroolefins are tetrafluoroethylene, chlorotrifluoroethylene, hexafluoropropylene, and perfluoromethylvinyl ether. The polyols may be linear or branched. Linear polyols may be of the type HOCH₂(CHOH)ₓ(CRR')_{y}CH₂OH, wherein R and R' are hydrogen, or CH₃, or C₂H₅ and wherein x is an integer from 0-4, and y is an integer from 0-4. Branched polyols may be of the type C(OH)ₜ(R)ᵤ(CH₂OH)ᵥ[(CH₂)ₘCH₂OH]_{w}, wherein R may be hydrogen, CH₃ or C₂H₅, m may be an integer from 0 to 3, t and u may be 0 or 1, v and w are integers from 0 to 4, and also wherein t + u + v + w = 4. Representative polyols are trimethylol propane, pentaerythritol, butanediol, and ethylene glycol.

1,1,1-trifluoroalkane compatibilizers of the present invention comprise 1,1,1-trifluoroalkanes represented by the general formula CF₃R¹, wherein R¹ is selected from aliphatic and alicyclic hydrocarbon radicals having from about 5 to about 15 carbon atoms, preferably primary, linear, saturated, alkyl radicals. Representative 1,1,1-trifluoroalkane compatibilizers include but are not limited to: 1,1,1-trifluorohexane and 1,1,1-trifluorododecane.

By effective amount of compatibilizer is meant that amount of compatibilizer that leads to efficient solubilizing of the lubricant in the composition and thus provides adequate oil return to optimize operation of the refrigeration, air-conditioning or heat pump apparatus.

The compositions of the present invention will typically contain from 0.1 to about 40 weight percent, preferably from about 0.2 to about 20 weight percent, and most preferably from about 0.3 to about 10 weight percent compatibilizer in the compositions of the present invention.

The heat transfer fluid of the present invention may be solubilized in a refrigeration lubricant selected from the group consisting of mineral oils, alkylbenzenes, synthetic paraffins, synthetic napthenes, and poly(alpha)olefins, wherein said method comprises contacting said lubricant with said composition in the presence of an effective amount of a compatibilizer, wherein said compatibilizer is selected from the group consisting of polyoxyalkylene glycol ethers, amides, nitriles, ketones, chlorocarbons, esters, lactones, aryl ethers, fluoroethers and 1,1,1-trifluoroalkanes.

The compositions of the present invention may further comprise an ultra-violet (UV) dye and optionally a solubilizing agent. The UV dye is a useful component for detecting leaks of the composition by permitting one to observe the fluorescence of the dye in the composition at a leak point or in the vicinity of refrigeration, air-conditioning, or heat pump apparatus. One may observe the fluoroscence of the dye under an ultra-violet light. Solubilizing agents may be needed due to poor solubility of such UV dyes in some compositions.

By "ultra-violet" dye is meant a UV fluorescent composition that absorbs light in the ultra-violet or "near" ultra-violet region of the electromagnetic spectrum. The fluorescence produced by the UV fluorescent dye under illumination by a UV light that emits radiation with wavelength anywhere from 10 nanometer to 750 nanometer may be detected. Therefore, if a composition containing such a UV fluorescent dye is leaking from a given point in a refrigeration, air-conditioning, or heat pump apparatus, the fluorescence can be detected at the leak point. Such UV fluorescent dyes include but are not limited to naphthalimides, perylenes, coumarins, anthracenes, phenanthracenes, xanthenes, thioxanthenes, naphthoxanthenes, fluoresceins, and derivatives or combinations thereof.

Solubilizing agents of the present invention comprise at least one compound selected from the group consisting of hydrocarbons, hydrocarbon ethers, dimethylether, polyoxyalkylene glycol ethers, amides, nitriles, ketones, chlorocarbons, esters, lactones, aryl ethers, fluoroethers and 1,1,1-trifluoroalkanes. The polyoxyalkylene glycol ethers, amides, nitriles, ketones, chlorocarbons, esters, lactones, aryl ethers, fluoroethers and 1,1,1-trifluoroalkanes solubilizing agents have been defined previously herein as being compatibilizers for use with conventional refrigeration lubricants.

Hydrocarbon solubilizing agents of the present invention comprise hydrocarbons including straight chained, branched chain or cyclic alkanes or alkenes containing 5 or fewer carbon atoms and only hydrogen with no other functional groups. Representative hydrocarbon solubilizing agents comprise propane, propylene, cyclopropane, n-butane, isobutane, 2-methylbutane and n-pentane. It should be noted that if the composition contains a hydrocarbon, then the solubilizing agent may not be the same hydrocarbon.

Hydrocarbon ether solubilizing agents of the present invention comprise ethers containing only carbon, hydrogen and oxygen, such as dimethyl ether (DME).

Solubilizing agents of the present invention may be present as a single compound, or may be present as a mixture of more than one solubilizing agent. Mixtures of solubilizing agents may contain two solubilizing agents from the same class of compounds, say two lactones, or two solubilizing agents from two different classes, such as a lactone and a polyoxyalkylene glycol ether.

In the present compositions comprising refrigerant and UV fluorescent dye, or comprising heat transfer fluid and UV fluorescent dye, from about 0.001 weight percent to about 1.0 weight percent of the composition is UV dye, preferably from about 0.005 weight percent to about 0.5 weight percent, and most preferably from 0.01 weight percent to about 0.25 weight percent.

Solubilizing agents such as ketones may have an objectionable odor, which can be masked by addition of an odor masking agent or fragrance. Typical examples of odor masking agents or fragrances may include Evergreen, Fresh Lemon, Cherry, Cinnamon, Peppermint, Floral or Orange Peel all commercially available, as well as d-limonene and pinene. Such odor masking agents may be used at concentrations of from about 0.001 % to as much as about 15% by weight based on the combined weight of odor masking agent and solubilizing agent.

Solubility of these UV fluorescent dyes in the compositions of the present invention may be poor. Therefore, methods for introducing these dyes into the refrigeration, air-conditioning, or heat pump apparatus have been awkward, costly and time consuming. US patent no. RE 36,951 describes a method, which utilizes a dye powder, solid pellet or slurry of dye that may be inserted into a component of the refrigeration, air-conditioning, or heat pump apparatus. As refrigerant and lubricant are circulated through the apparatus, the dye is dissolved or dispersed and carried throughout the apparatus. Numerous other methods for introducing dye into a refrigeration or air conditioning apparatus are described in the literature.

Ideally, the UV fluorescent dye could be dissolved in the refrigerant itself thereby not requiring any specialized method for introduction to the refrigeration, air conditioning apparatus, or heat pump. The present invention relates to compositions including UV fluorescent dye, which may be introduced into the system as a solution in the refrigerant. The inventive compositions will allow the storage and transport of dye-containing compositions even at low temperatures while maintaining the dye in solution.

In the present compositions comprising refrigerant, UV fluorescent dye and solubilizing agent, or comprising heat transfer fluid and UV fluorescent dye and solubilizing agent, from about 1 to about 50 weight percent, preferably from about 2 to about 25 weight percent, and most preferably from about 5 to about 15 weight percent of the combined composition is solubilizing agent. In the compositions of the present invention the UV fluorescent dye is present in a concentration from about 0.001 weight percent to about 1.0 weight percent, preferably from 0.005 weight percent to about 0.5 weight percent, and most preferably from 0.01 weight percent to about 0.25 weight percent.

### EXAMPLES

### Example 1

A hose is constructed according to one embodiment of the invention in the following manner. A mandrel is first made in the form of a solid rod with a diameter of 6.4 mm. A veneer consisting of an inner layer of 0.65 mm thick Zytel^{®} 42 (a high MWA 66 commercially available from E.I. du Pont de Nemours and Company) and 0.1 mm thick outer tie layer of Bynel^{®} 4206 (a maleic anhydride grafted polyethylene commercially available from E.I. du Pont de Nemours and Company) is extruded over the mandrel. The assembly is then laminated with a metal-polymer laminate available as BFW 46 and obtained from James Dawson Enterprises Ltd of Lachine, Quebec, Canada. The laminate consists of an inner layer of low density polyethylene, a tie layer of EEA, an aluminum foil(10 micron thick) and an outer layer of polyethylene terephthalate (PET) with a total thickness of 0.1 mm. Lamination is carried out using a heated die with a passage way of appropriate size to pass the assembly through. The assembly of the previous step is uncoiled from a spool and a strip of metal-polymer laminate is wrapped around it such that two long edges of the strip mat against each other. The assembly is passed through the die heated to 140 C to affect the bonding. Excess laminate edge is trimmed off carefully so as not to damage the seal and avoid exposing underlying layer. A layer of TPV is extruded over the assembly. Following that, a braid of PET filaments is applied, and outer protective layer of ETPV is extruded over the top. The mandrel is subsequently extracted to prepare the multi-layer hose.

### Example 2

Samples of hoses as described Example 1 were tested for hose permeation following the procedure outlined in Standard SAE J2064. Lengths of hose were cut and fitted at the ends to contain refrigerant. Hoses were charged with refrigerant to 70% by volume. Hoses were then placed in an oven and held at 80C for 28 days. Hoses were periodically removed and weighed to determine refrigerant loss. An overall loss or permeation rate was then determined in kg/m2/yr. Results are shown in Table 9.

**TABLE 9**

| Refrigerant Composition | Hose Permeation Rate (kg/m2/yr) |
|---|---|
| R134a | 0.44 |
| 1225ye/R32 (95/5 wt%) | 0.45 |
| 1225ye/1234yf/134a (45/45/10 wt%) | 0.07 |

Results show hoses permeation for fluoroolefin compositions are at least equivalent to R134a. Since R32 is a small molecule, it contributes the most to hose permeation. The composition containing primarily fluoroolefins and a small amount of R134a had significantly lower permeation than R134a alone indicating, indicating fluoroolefins have overall lower permeation rates.

## Claims

1. A method of providing transport of a heat transfer fluid composition within a refrigeration or air conditioning system, comprising circulating a heat transfer fluid through one or more hoses of said system, wherein said heat transfer fluid composition comprises a compound selected from the group consisting of: R32, R152a, CF₃I, 1234yf, 1225ye and trans-1234ze.

2. The method of claim 1, wherein the method comprises the steps of circulating the heat transfer fluid composition from a hose connected between the outlet of a compressor and the inlet of a condenser.

3. The method of claim 2, further comprising the step of circulating the heat transfer fluid composition through a hose connected between an outlet of the condenser and an inlet of an evaporator.

4. The method of claim 3, further comprising the step of circulating the heat transfer fluid composition through a hose connected between an outlet of the evaporator and an inlet of the compressor.

5. The method of claim 3, wherein the hose comprises an outer layer comprising a material selected from the group consisting of an elastomer and a polyamide and an inner layer comprising a material selected from the group consisting of an elastomer, a polyamide and a thermoplastic.

6. The method of claim 5, wherein the inner layer comprises a thermoplastic veneer and the outer layer comprises an elastomer.

7. The method of claim 6, further including:
(a) a tie layer positioned over said inner layer;
(b) a metal-polymer laminate positioned over said tie layer and consisting of a layer of polymer compatible with or bondable to said outer surface of said veneer, a thin layer of metallic foil, and another layer of a polymer protecting the metallic foil;
(c) a braid under-layer positioned over said metal-polymer laminate and consisting of an elastomeric material; and
(d) a reinforcing braid layer positioned over said braid under-layer, wherein the outer layer is positioned on the outside of the reinforcing braid layer.

8. The method of claim 7, further comprising one or more additional reinforcing braid layers (d) and/or one or more additional outer layers.

9. The method of claim 1, wherein the heat transfer fluid composition comprises HFC-1225ye and at least one additional compound selected from the group consisting of HFC-1234ze, HFC-1234yf, HFC-1234ye, HFC-1243zf, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF₃SCF₃, CO₂, NH₃, and CF₃I.

10. The method of claim 1, wherein the heat transfer fluid composition comprises HFC-1234ze and at least one additional compound selected from the group consisting of HFC-1234yf, HFC-1234ye, HFC-1243zf, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF₃SCF₃, CO₂ and CF₃I.

11. The method of claim 1, wherein the heat transfer fluid composition comprises HFC-1234yf and at least one additional compound selected from the group consisting of HFC-1234ye, HFC-1243zf, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF₃SCF₃, CO2, NH₃, and CF₃I.

12. The method of claim 1, wherein the heat transfer fluid composition comprises HFC-1243zf and at least one additional compound selected from the group consisting of HFC-1234ye, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF₃SCF₃, CO₂ and CF₃I.

13. The method of claim 1, wherein the heat transfer fluid composition comprises HFC-1234ye and at least one additional compound selected from the group consisting of HFC-1243zf, HFC-32, HFC-125, HFC-134, HFC-134a, HFC-143a, HFC-152a, HFC-161, HFC-227ea, HFC-236ea, HFC-236fa, HFC-245fa, HFC-365mfc, propane, n-butane, isobutane, 2-methylbutane, n-pentane, cyclopentane, dimethylether, CF₃SCF₃, CO₂ and CF₃I.
